(19) Europäisches Patentamt / European Patent Office / Office européen des brevets

(11) **EP 3 393 762 B1**

(12) **EUROPÄISCHE PATENTSCHRIFT**

(45) Veröffentlichungstag und Bekanntmachung des Hinweises auf die Patenterteilung:
**21.04.2021  Patentblatt 2021/16**

(21) Anmeldenummer: **16831889.7**

(22) Anmeldetag: **19.12.2016**

(51) Int Cl.:
*B29C 64/165* (2017.01)    *B29C 64/214* (2017.01)
*B29C 64/218* (2017.01)    *B22F 3/105* (2006.01)
*B33Y 10/00* (2015.01)     *B33Y 30/00* (2015.01)

(86) Internationale Anmeldenummer:
**PCT/DE2016/000436**

(87) Internationale Veröffentlichungsnummer:
**WO 2017/108019 (29.06.2017 Gazette 2017/26)**

(54) **VERFAHREN UND VORRICHTUNG ZUM HERSTELLEN VON 3D-FORMTEILEN MIT SCHICHTAUFBAUTECHNIK**

METHOD AND DEVICE FOR PRODUCING 3D SHAPED PARTS USING LAYERING TECHNOLOGY

PROCÉDÉ ET DISPOSITIF DE FABRICATION DE PIÈCES EN 3D SELON LA TECHNIQUE D'IMPRESSION PAR COUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2015   DE 102015016464**

(43) Veröffentlichungstag der Anmeldung:
**31.10.2018   Patentblatt 2018/44**

(73) Patentinhaber: **Voxeljet AG**
**86316 Friedberg (DE)**

(72) Erfinder:
• **GÜNTHER, Daniel**
  **81371 München (DE)**

• **SCHECK, Christoph**
  **86154 Augsburg (DE)**
• **BRÜLLER, Lisa**
  **86156 Augsburg (DE)**
• **EDERER, Ingo**
  **82269 Geltendorf (DE)**

(74) Vertreter: **Helbig, Christian**
  **Wagner + Helbig**
  **Patentanwälte**
  **Pfarrstrasse 14**
  **80538 München (DE)**

(56) Entgegenhaltungen:
**EP-B1- 1 600 281      EP-B1- 1 737 646**
**EP-B1- 1 879 731      WO-A1-2005/090055**
**WO-A2-02/083323**

EP 3 393 762 B1

**Beschreibung**

Die Erfindung bezieht sich auf ein Verfahren und eine Vorrichtung zum Herstellen dreidimensionaler Modelle mittels Schichtaufbautechnik.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse (auch als schichtweises Aufbauen von Modellen oder als Schichtbautechnik bezeichnete Verfahren), wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren verstanden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, unter anderem auch polymere Werkstoffe, verarbeiten. Der Nachteil besteht hier jedoch darin, dass die Partikelmaterialschüttung eine gewisse Schüttdichte, die üblicherweise 60% der Feststoffdichte beträgt, nicht übersteigen kann. Die Festigkeit der gewünschten Bauteile hängt jedoch maßgeblich von der erreichten Dichte ab. Insofern wäre es hier für eine hohe Festigkeit der Bauteile erforderlich, 40% und mehr des Partikelmaterialvolumens in Form des flüssigen Binders zuzugeben. Dies ist nicht nur aufgrund des Einzeltropfeneintrages ein relativ zeitaufwändiger Prozess, sondern bedingt auch viele Prozessprobleme, die z.B. durch die zwangsläufige Schwindung der Flüssigkeitsmenge beim Verfestigen gegeben sind.

In einer anderen Ausführungsform, der unter dem Begriff "High-Speed-Sintering", in der Fachwelt bekannt ist, erfolgt die Verfestigung des Partikelmaterials über Eintrag von Infrarotstrahlung. Das Partikelmaterial wird dabei physikalisch über einen Aufschmelzvorgang gebunden. Hierbei wird die vergleichsweise schlechte Aufnahme von Wärmestrahlung bei farblosen Kunststoffen ausgenutzt. Diese lässt sich durch Einbringen eines IR-Akzeptors (Absorber) in den Kunststoff um ein Vielfaches steigern. Die IR-Strahlung kann dabei über verschiedene Möglichkeiten wie z.B. einer stabförmigen IR-Lampe eingebracht werden, die gleichmäßig über das Baufeld bewegt wird. Die Selektivität wird über das gezielte Bedrucken der jeweiligen Schicht mit einem IR-Akzeptor erreicht.

An den Stellen, die bedruckt wurden, koppelt die IR Strahlung dadurch wesentlich besser in das Partikelmaterial ein, als in den unbedruckten Bereichen. Dies führt zu einer selektiven Erwärmung in der Schicht über den Schmelzpunkt hinaus und damit zur selektiven Verfestigung. Dieser Prozess wird z.B. in EP1740367B1 und EP1648686B1 beschrieben und im Folgenden mit der Bezeichnung HSS abgekürzt.

Vom Lasersinterprozess sind verschiedene Materialien bekannt, die auch mit diesem Verfahren verarbeitet werden können. Dabei ist bei weitem das wichtigste Material Polyamid 12. Für dieses Material gibt es mehrere Hersteller. Es werden für Schichtbauverfahren ausgezeichnete Festigkeiten erzielt.

Das Material kann als feines Pulver bezogen werden, das direkt in dieser Qualität verarbeitet werden kann. Bedingt durch den Herstellungsprozess fallen aber hohe Kosten an, die die Kosten für Standardpolyamid um den Faktor 20-30 übertreffen können.

Beim High Speed Sintering nach dem Stand der Technik wird das Pulver, genau wie bei Lasersintern, zur Verarbeitung auf eine Temperatur nahe des Schmelzpunktes des Materials gebracht. Dabei "altert" das Pulver und kann in Folgeprozessen nur noch bedingt eingesetzt werden. Es ergibt sich eine geringe Recyclingquote, die die Prozesskosten negativ beeinflusst.

Beispielsweise ist es hierzu aus der US 20050263933 A1 bekannt das Pulver bei 90°C in den Prozessraum zu bringen und dann im Prozessraum auf noch höhere Temperaturen aufzuheizen. Dies ist insbesondere deshalb notwendig, da beim Auftragen einer neuen Schicht aus kaltem frischem Pulver die oberste bereits vorhandene Schicht einen thermischen Schock erfährt. Bei einem zu großen Temperaturunterschied wird die Kristallisation des Pulvers ausgelöst und es kommt zu einem Bauteilverzug. Deshalb muss frisch aufgebrachtes Pulver schnellst möglich auf Prozesstemperatur (knapp unterhalb des Schmelzpunktes des jeweiligen Polymers) gebracht werden.

Die Genauigkeit der Bauteile wird maßgeblich durch die Prozessführung beeinflusst. Dabei ist die Homogenität der Größen wie Pulverbettdichte und Temperatur im Bauraum entscheidend.

Die bekannten Verfahren des High-Speed-Sintering und das Lasersintern beinhalten eine Vielzahl von Nachteilen, die zum einen die Recyclingrate und zum anderen die Prozesskosten betreffen und damit die Stückkosten erhöhen und relativ teuer machen. Insbesondere ist die Alterung des Pulvers ein entscheidendes Problem und die damit verbundene geringe Recyclingrate sehr hinderlich bei der Verbreitung dieses Prozesses. Bislang müssen ca. 50 % des nicht in Teilen verbauten Pulvers nach einem Prozess ersetzt werden. Bei Pulverpreisen von ca. 80€/kg und Bauvolumen von mehreren hundert Litern sind hier hohe finanzielle Aufwendungen nötig.

Ein Ansatz zur Lösung der prozessbedingten Probleme und damit eine Kostensenkung ist die Verwendung von günstigeren Pulvern. Diesem Vorgehen sind allerdings enge Grenzen gesetzt, da die meisten Pulver kein ausreichendes "Sinterfenster" aufweisen, um sicher verarbeitet zu werden. Das bedeutet, dass für die Pulver kaum stabile Prozessgrößen gefunden werden können.

Die Pulveralterung chemisch Einzuschränken ist ein weiterer Ansatz. Dabei sind beispielsweise mit Stickstoff gespülte Maschinen im Lasersintern üblich. Damit kann Pulveroxidation verhindert werden. Ganz Einschränken kann man die Alterung aber schon verfahrensbedingt nicht, da ein Teil der Verfestigungsreaktion durch eine Nachreaktion des Polymers geschieht. Diese Nachreaktion einzuschränken würde wesentliche Festigkeitseinschränkungen bedeuten.

Ein Problem bei bekannten High-Speed-Sintering Verfahren ist die Einstellung von vorteilhaften Verfahrensbedingungen wie z.B. der Temperaturfenster bezogen auf die verwendeten Partikelmaterialien. Das High-Speed-Sintering Verfahren vereint sehr viele Prozessparameter und die hierin verwendeten 3D-Druckmaschinen weisen sehr viele konstruktive Merkmale und Bauteile auf, sodass es schwierig ist, die geeigneten Bauteile zusammen zu stellen und einen vorteilhaften oder verbesserten Verfahrensablauf einzustellen, die verbesserte Verfahrensbedingungen erlauben. Oft ist es schwierig festzustellen, welche konstruktiven Änderungen nötig sind, um annehmbare Verfahrensergebnisse zu erreichen und qualitativ hochwertige 3D-Teile zu erhalten bzw. das Verfahren zu optimieren.

Weiterhin erfordert die Realisierung einer Sintermaschine mittels Inkjet-Technologie bei heißem Bauraum komplexe Kühlmechanismen für den Druckkopf. Bei zu hoher Temperatur wird der Druckkopf beschädigt. Ein dauerhafter Betrieb in einem heißen Bauraum ist deshalb nicht ohne weiteres möglich.

Darüberhinaus gestaltet sich die Achsenkonstruktion insbesondere bei Sinter-Maschinen mit Inkjet-Technologie aufgrund der benötigten Abtrennung des heißen Bauraums sehr aufwändig.

Außerdem ist allen Sinter-Maschinen gemein, dass sich die notwendige Isolation und Abschottung des Bauraums i.A. komplex und teuer gestaltet.

Dabei ist zu erwähnen, dass der Energieverlust in der Prozesskammer durch Wärmeverluste nicht nur zu Energiemehrkosten führt. Die Zeit bis zur Erreichung der Prozesstemperatur im Bauraum, bei welcher mit dem Druckprozess begonnen werden kann, verringert den effektiven Bauteiledurchsatz in großem Maße. Der Aufheizvorgang kann bei handelsüblichen Sintermaschinen bis zu mehreren Stunden betragen. Da sich Teile der Maschine während des Druckprozesses immer weiter aufheizen, muss die Temperatur der Prozesskammer mittels einer komplexen Regelung nachgeführt werden, da sich anderweitig unterschiedliche Bauteileigenschaften während des Druckprozesses, aufgrund Veränderung der Umgebungsbedingungen ergeben. Auch durch im Prozess eingesetzte Inkjet-Technologien ergeben sich aufgrund der temperaturabhängigen Veränderung der rheologischen Eigenschaften des Absorberfluids Inhomogenitäten in den Formkörpereigenschaften.

Die erwähnten Nachteile des Stands der Technik wirken sich in Summe negativ auf die Skalierbarkeit des Prozesses aus. Die Herstellungskosten für größere Maschinen steigen dabei in erheblichem Maße. Zudem wird es ab bestimmter Größe aufgrund von Konvektion und Wärmeleitung sehr schwer, im Prozessraum eine homogene Temperaturverteilung zu realisieren, wodurch die Maschinengröße begrenzt ist.

Es war deshalb eine Aufgabe der vorliegenden Erfindung konstruktive Mittel bereitzustellen, die ein verbessertes HSS Verfahren erlauben oder zumindest die Nachteile des Standes der Technik zu verbessern oder ganz zu vermeiden.

Es war eine weitere Aufgabe der Erfindung verbesserte Verfahrensbedingungen im HSS Verfahren bereitzustellen bzw. durch eine gezielte Auswahl von Vorrichtungskomponenten oder/und die Einstellung von Verfahrensbedingungen verbesserte Verfahrensergebnisse zu erzielen.

Ein weiteres Problem und ein weiterer Nachteil bei der Herstellung von 3D-Formteilen mit HSS sind Temperaturgradienten, die über die Fläche des herzustellenden Bauteils und das Bauteil umgebende Baumaterial bis hin zu den Randbereichen der Bauplattform auftreten. Damit gehen Nachteile einher, die entweder störend für das Verfahren selbst sind oder Qualitätsnachteile bedingen, wie z.B. Curling, Verzug, Ungenauigkeit des Formteils oder erhöhter Ausschuss.

Insbesondere ein gleichmäßiger und temperierter Baumaterialauftrag des Pulvers stellt eine Herausforderung in Verfahren des Standes der Technik dar.

Während des HSS Verfahrens wird zyklisch die Oberflächentemperatur der Pulverschüttung selektiv erhöht und erniedrigt und am Ende des Aufbauprozesses das fertige Formteil vollständig abgekühlt.

Die Temperatur in dem aufzubauenden Formteil sollte idealerweise möglichst konstant auf einem Wert knapp oberhalb der Erstarrungstemperatur liegen und nur in der Aufbauzone innerhalb eines schmalen Temperaturbandes, das den Schmelzpunkt des Pulvers übersteigt schwanken. Aufgrund der Abstrahlung und Wärmeleitung in das umliegende Partikelmaterial, kühlt der Formteilrand schneller ab als innere Bereiche und es kommt zu unerwünschten Temperaturunterschieden im Formteil mit den oben erwähnten Nachteilen.

Eine weitere Aufgabe der vorliegenden Erfindung war es, ein Verfahren bereit zu stellen, das es erlaubt im herzustellenden Formteil eine gleichbleibende, kontrollierbare und/oder eine im wesentlichen gleichmäßige Temperaturverteilung in dem herzustellenden 3D-Formteil und/oder das dieses Formteil umgebende Baumaterial während des Aufbauprozesses zu erreichen und/oder zu hohe und ungünstige Temperaturgradienten über die Aufbaufläche zu vermeiden oder zumindest zu vermindern.

Aus den DE102006055050A1, DE102006023485A1, DE102013206458A1 und der DE102005022308B4 ist zum Auftragen des Pulvers für den Sinterprozess ein Blade bekannt, das als Rotationsbeschichter ausgeführt ist. Dieser wird über die Pulveroberfläche in einer Schwenkbewegung (vergleichbar mit einem Scheibenwischer) geführt und schiebt das Partikelmaterial in einer Art Pulverwalze vor sich her. Problematisch hat sich hier wiederum erwiesen, dass der Bauraum auf hoher Temperatur gehalten werden muss, damit das Pulver vorgeheizt werden kann, ohne auszukühlen und die Pulverwalze, die der Beschichter mit vor sich herführt während des Materialauftrags nicht stark auskühlt.

Bei der Pulverwalze hat es sich darüberhinaus als problematisch erwiesen, dass die Rotationsbewegung entlang des Radius zu einer höheren Beschichtungsgeschwindigkeit führt und dies Qualitätsunterschiede der Formkörper in Abhängigkeit der Lage zur Folge hat.

Die Pulverwalze wird normalerweise während des Überstreichens kleiner, so dass ein Wärmeabfluss auf der Seite der großen Walze (Richtung Rotationsmittelpunkt) höher ist. Die Pulverwalze kann auch entlang der Klinge kleiner werden. Diese Temperaturunterschiede, je nach Lage des Formkörpers, führen zu Qualitätsunterschieden der erstellten Formkörper.

Es ist daher eine noch weitere Aufgabe der Erfindung, die Eigenschaften der Pulverwalze derart anzupassen, dass es keine Qualitätsunterschiede im herzustellenden Bauteil bewirkt.

Kurze Zusammenfassung der Offenbarung

In einem Aspekt betrifft die Offenbarung ein Verfahren zum Herstellen von dreidimensionalen Bauteilen, wobei Partikelmaterial schichtweise auf ein Baufeld aufgetragen wird, selektiv ein Absorber aufgebracht wird, die Bereiche mit Absorber über einen Energieeintrag verfestigt werden und die Schritte solange wiederholt werden bis das oder die dreidimensionalen Bauteile erhalten wurden, wobei das Partikelmaterial mittels Recoater aufgebracht wird und der Absorber mit einem Druckkopf selektiv aufgebracht wird, das Partikelmaterial mittels Energieeintragsmittel verfestigt wird, wobei der Recoater ein Schwingklingenrecoater ist, der eine Temperatur von 70 °C bis 155 °C aufweist, das Partikelmaterial durch Erzeugen einer Partikelmaterialwalze in Beschichtungsrichtung vor dem Recoater aufgetragen wird, der Durchmesser der Partikelmaterialwalze einstellbar ist, und das Partikelmaterial beim Auftragen auf das Baufeld mittels Energieeintragsmittel auf eine Temperatur von 155 °C bis 180 °C erwärmt oder gehalten wird.

In einem weiteren Aspekt betrifft die Offenbarung eine Vorrichtung zum Durchführen eines 3D-Druckverfahrens, die aufweist: a. ein Baufeld, b. einen Schwingklingenrecoater mit Heizelement, c. einen Druckkopf, d. ein oder mehrere Energieeintragsmittel, wobei am oder neben dem Recoater ein Energieeintragsmittel zusammen mit diesem verfahrbar angebracht ist und vorzugsweise Leitmittel zum Einstellen der Bauraumtemperatur mittels Luftstromdurchführung durch den Bauraum.

Kurze Beschreibung der Zeichnung

Ausführungsbeispiele der Erfindung sind in der Zeichnung dargestellt. In der Zeichnung zeigt:

Fig. 1 eine Vorrichtung zum Partikelmaterialauftrag nach dem Stand der Technik mit Klingenbeschichter,

a) Momentaufnahme zu Beginn des Beschichtungsvorgangs,

b) gegen Ende des Beschichtungsvorgangs. Erkennbar ist die deutlich kleinere Pulverwalze in b);

Fig. 2 eine Vorrichtung zum Partikelmaterialauftrag nach dem Stand der Technik, ausgeführt mittels Rollenbeschichters;

Fig. 3 eine schematische Darstellung des resultierenden Temperaturverlaufs auf der Partikelmaterialoberfläche bei Verwendung einer Beschichtervorrichtung nach dem Stand der Technik, Ansicht Partikelmaterialoberfläche von oben und resultierende Formkörper in Seitenansicht;

Fig. 4 eine detaillierte schematische Darstellung der Vorrichtung nach einer bevorzugten Ausführungsform der Erfindung des Schwingklingenbeschichters, a) während des Partikelmaterialauftrags, b) während der Befüllung, c) detaillierte Ausführung der Bewegung des Partikelmaterials während des Beschichtungsvorgangs;

Fig. 5 eine weitere bevorzugte Ausführungsform einer Vorrichtung zur generativen Erzeugung von Formkörpern mit temperiertem Partikelmaterial;

Fig. 6 eine Detaillierte schematische Darstellung der Luftführung einer Vorrichtung mit kaltem Bauraum nach einer bevorzugten Ausführungform der Erfindung;

Fig. 7 eine detaillierte schematische Darstellung eines möglichen Aufbaus eines Overhead-Strahler-Aggregats mit resultierendem Strahlverlauf, resultierender Strahlungsintensität und darauf folgender Temperaturverlauf auf der Pulveroberfläche;

Fig. 8 eine schematische Darstellung eines Systems zur Temperierung des Absorberfluids nach einer bevorzugten Ausführungsform der Erfindung;

Fig. 9 eine schematische Darstellung eines Bauraumes mit Temperaturangaben für eine bevorzugte Ausführungsform der Erfindung;

Fig. 10 eine schematische Darstellung der Luftführung im Bauraum nach einer bevorzugten Ausführungsform;

Fig. 11 eine Darstellung einer Vorrichtung nach der Erfindung mit der Leistung eines Sinterstrahlers, a) beim Sintern und b) beim Recoaten.

Ausführliche Beschreibung der Offenbarung

Erfindungsgemäß wird eine der Anmeldung zugrunde liegenden Aufgabe dadurch gelöst, dass gezielt vorteilhafte Baukomponenten und Verfahrensparameter kombiniert werden, die zu vorteilhaften Verfahrensergebnissen führen.

Erfindungsgemäß werden weitere der Anmeldung zugrunde liegenden Aufgaben dadurch gelöst, dass bei einem Verfahren zum Herstellen von dreidimensionalen Bauteilen, bei dem Partikelmaterial schichtweise auf ein Baufeld aufgetragen wird, selektiv ein Absorber aufgebracht wird, die Bereiche mit Absorber verfestigt werden und die Schritte solange wiederholt werden bis das oder die dreidimensionalen Bauteile erhalten wurden, das Partikelmaterial mittels temperierbarem Recoater aufgebracht wird. Weiterhin ist es vorgesehen, dass der Absorber mit einem Druckkopf selektiv aufgebracht wird und das Partikelmaterial selektiv mittels Energieeintragsmittel verfestigt wird. Der Recoater ist dabei ein Schwingklingenrecoater, der auf eine Temperatur von 70 °C bis 155 °C eingestellt wird. Das Partikelmaterial wird durch Erzeugen einer Partikelmaterialwalze in Beschichtungsrichtung vor dem Recoater aufgetragen, wobei der Durchmesser der Partikelmaterialwalze einstellbar ist. Das Partikelmaterial wird beim Auftragen auf das Baufeld mittels Energieeintragsmittel auf eine Temperatur von 155 °C bis 180 °C erwärmt.

Im Folgenden werden zunächst einige Begriffe der Erfindung näher erläutert.

"3D-Formteil", "Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien durchläuft. Im Allgemeinen wird der Bauraum durch einen Boden, die Bauplattform, durch Wände und eine offene Deckfläche, die Bauebene, begrenzt. Bei kontinuierlichen Prinzipien existieren meist ein Förderband und begrenzende Seitenwände. Der Bauraum kann auch durch eine sogenannte Jobbox ausgestaltet sein, die eine in die Vorrichtung ein- und ausfahrbare Einheit darstellt und eine Batch-Herstellung erlaubt, wobei eine Jobbox nach Prozessabschluss ausgefahren wird und sofort eine neue Jobbox in die Vorrichtung eingefahren werden kann, sodass das Herstellungsvolumen und somit die Vorrichtungsleistung erhöht wird.

Die "Aufheizphase" kennzeichnet ein Erwärmen der Vorrichtung zu Beginn des Verfahrens. Die Aufheizphase ist abgeschlossen, wenn die Ist-Temperatur der Vorrichtung einen stationären Wert erreicht.

Die "Abkühlphase" bezeichnet die Dauer, die notwendig ist, um das Partikelmaterial so abzukühlen, dass die darin enthaltenen Bauteile keine merklichen plastischen Deformationen beim Entnehmen aus dem Bauraum erfahren.

Als "Partikelmaterialien" oder "partikelförmige Baumaterialien" oder "Baumaterialien" können alle für den Pulverbasierten 3D Druck bekannten Materialien verwendet werden, insbesondere Polymere, Keramiken und Metalle. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" kann im Sinne der Erfindung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile bei kontinuierlichen Verfahren, Dosiervorrichtungen und Wärme- und Bestrahlungsmittel und andere dem Fachmann bekannte Bauteile, die deshalb hier nicht näher ausgeführt werden.

Der "Absorber" ist im Sinne dieser Erfindung ein mit einem Tintenstrahldruckkopf oder mit einer anderen matrixartig arbeitenden Vorrichtung verarbeitbares Medium, das die Absorption von Strahlung zur lokalen Erwärmung des Baumaterials fördert. Der Absorber kann auch partikelförmig sein wie beispielsweise schwarzer Toner. Absorber können gleichmäßig oder in unterschiedlichen Mengen selektiv aufgebracht werden. Der Absorber kann z.B. als Gemisch von Absorbern mit unterschiedlichen Absorptionsmaxima aufgebracht werden oder unterschiedliche Absorber unabhängig voneinander, z.B. nacheinander, alternierend oder mit einer vorbestimmten Sequenz. Bei Aufbringen in unterschiedlichen Mengen kann man somit die Festigkeit in dem Baumaterial steuern und selektiv unterschiedliche Festigkeiten erzielen, beispielsweise in dem herzustellenden Formteil und den dieses umgebenden Mantel. Der Bereich der Festigkeit reicht von einer Festigkeit wie im Bauteil selbst bis zu eine Festigkeit, die nur unwesentlich über der des Baumaterials ohne Absorberaufdruck liegt. Damit wird es möglich eine Temperaturregulierung in dem Baufeld/Bauraum vorzunehmen und wenn gewünscht den Mantel, der der Temperaturregulierung dient, auch leicht um das hergestellte Bauteil zu entfernen.

Die "Absorption" bezeichnet die Aufnahme der Wärmeenergie von Strahlung durch das Baumaterial. Die Absorption ist abhängig vom Pulvertyp und der Wellenlänge der Strahlung.

"Energieeintragsmittel" bedeutet im Folgenden eine Quelle zum Eintragen von Energie in den Bauraum oder/und das Partikelmaterial oder/und die mit Absorber bedruckten Bereiche. Dies kann beispielsweise eine Energiquelle zum temperieren oder heizen von Partikelmaterial, auch vor dem Absorbereintrag, sein. Es könnte aber auch eine Bestrahlung des Baufeldes mit festen oder beweglichen Strahlungsquellen sein. Wird die Strahlungsquelle nach dem Absorbereintrag zum Verfestigen verwendet, ist der Absorber vorzugsweise auf die Strahlungsart abgestimmt und vorzugsweise optimiert. Dabei soll es zu einer unterschiedlich starken Erwärmung von "aktiviertem" und nicht "aktiviertem" Pulver kommen. "Aktiviert" bedeutet, dass durch den Absorbereindruck die Temperatur in diesen Bereichen erhöht wird im Vergleich zu den übrigen Bereichen im Bauraum und dem nicht mit Absorber bedruckten Partikelmaterialbereichen.

"IR-Erwärmung" bedeutet in dieser Schrift speziell eine Bestrahlung des Baufeldes mit einem IR-Strahler. Dabei kann der Strahler ebenso statisch sein oder mit einer Verfahreinheit über das Baufeld bewegt werden. Durch den Einsatz des Absorbers führt die IR-Erwärmung im Baufeld zu unterschiedlich starken Temperaturanstiegen.

Ein "IR-Strahler" ist eine Quelle von infraroter Strahlung. Dabei werden meist glühende Drähte in Quarz oder Keramikgehäusen zur Erzeugung der Strahlung benutzt. Je nach eingesetzten Materialien ergeben sich unterschiedliche Wellenlängen der Strahlung. Die Wellenlänge ist bei diesem Strahlertyp zusätzlich abhängig von der Leistung.

Eine "Overheadlampe" oder "Overheadstrahler" im Sinne der Erfindung ist eine Strahlungsquelle die über dem Baufeld angebracht ist. Sie ist stationär kann aber in ihrer Strahlungsleistung reguliert werden.

Eine "Sinterlampe" ist das Energieeintragsmittel, das das Prozesspulver (partikelförmiges Baumaterial) über seine Sintertemperatur erhitzen kann. Sie kann stationär sein. In bevorzugten Ausführungen wird sie über das Baufeld bewegt.

"Sintern" oder "Schmelzen" ist der Begriff für das partielle Zusammenwachsen der Partikel im Pulver. Mit dem Sintern verbunden ist bei diesem System der Aufbau von Festigkeit.

Der Begriff "Sinterfenster" bezeichnet die Differenz der Temperatur des beim ersten Aufheizen des Pulvers auftretenden Schmelzpunktes und dem bei anschließendem Abkühlen auftretenden Erstarrungspunktes.

Die "Sintertemperatur" ist die Temperatur ab der das Pulver erstmalig aufschmilzt und sich verbindet.

Unterhalb der "Rekristallisationstemperatur" wird einmal aufgeschmolzenes Pulver wieder fest und schwindet deutlich.

"Recyclingquote" bezeichnet das Verhältnis der Menge Partikelmaterial, die nach Abschluss des Bauprozesses für einen neuen Prozesslauf verwendet werden kann zur Menge des Partikelmaterials das für einen Prozesslauf insgesamt benötigt wird. Partikelmaterialien, die sich aufgrund des Bauprozesses in ihren Eigenschaften verändern, bedingen in manchen Fällen eine Zumischung eines nicht im Prozess verwendeten Anteils an Partikelmaterial. Typisches Beispiel ist Polyamid 12, das bei Aufheizung nahe an den Schmelzpunkt irreversibel thermisch geschädigt wird.

Die "Packungsdichte" beschreibt die Ausfüllung des geometrischen Raumes durch Feststoff. Sie hängt von der Natur des Partikelmaterials und der Auftragsvorrichtung ab und ist eine wichtige Ausgangsgröße für den Sinterprozess.

Der Begriff "Schwindung" bezeichnet den Vorgang der geometrischen Verkürzung einer Abmessung eines geometrischen Körpers infolge eines physikalischen Vorganges. Beispielhaft ist das Sintern von nicht ideal gepackten Pulvern ein Vorgang, der eine Schwindung relativ auf das Anfangsvolumen mit sich bringt. Einer Schwindung kann eine Richtung zugeordnet werden.

"Deformation" tritt auf, wenn der Körper bei einem physikalischen Prozess eine ungleichmäßige Schwindung erfährt. Diese Deformation kann reversibel oder irreversibel sein. Die Deformation wird oft auf die globale Geometrie des Bauteils bezogen.

Das Baumaterial wird immer in einer "definierten Schicht" oder "Schichtstärke" aufgebracht, die je nach Baumaterial und Verfahrensbedingungen individuell eingestellt wird. Sie beträgt beispielsweise 0,05 bis 0,5 mm, vorzugsweise 0,1 bis 0,3 mm.

"Temperieren" bezeichnet das Einstellen einer gewünschten Temperatur im Bauraum, der konstant gehalten werden kann oder zyklisch variiert werden kann. Vorzugsweise wird eine Grundtemperatur auf einen gewählten Wert eingestellt. "Temperieren" bezeichnet auch eine gewünschte Temperatureinstellung des aufgetragenen Partikelmaterials oder des Partikelmaterials im Recoater.

Unter dem "Baufeld" ist im Sinne der Erfindung der Bereich der Vorrichtung zu verstehen, auf das das Partikelmaterial aufgetragen wird.

Der "Recoater" wird zum Auftragen von Partikelmaterial auf das Baufeld verwendet. Gemäß der vorliegenden Erfindung handelt es sich dabei um einen Schwingklingenrecoater. Schwingklingenrecoater sind allgemein aus dem Stand der Technik bekannt. Welche Klinge verwendet wird, mit welchem Winkel, Radius, Geschwindigkeit, Amplitude sie schwingt usw. wird entsprechend dem verwendeten Partikelmaterial gewählt und kann speziell eingestellt werden.

Die "Partikelmaterialwalze" ist das Partikelmaterial, das in Beschichtungsrichtung vor dem Recoater auf das Baufeld aufgebracht wird und sich durch die Bewegung des Recoaters als eine Partikelmaterialwalze ausbildet, die vor dem Recoater läuft.

"Durchmesser der Partikelwalze" im Sinn der Offenbarung ist die größte Dimension gemessen in Auftragsrichtung der Walze, die vor dem Beschichter (Recoater) erzeugt wird und vorzugsweise einen Halb- bis Viertelkreis bildet. Sie kann 2 bis 10 mm, vorzugsweise 2 bis 4 mm und sehr bevorzugt 4 mm betragen. Dieser Durchmesser wird auf die anderen Verfahrensbedingungen eingestellt und in Abhängigkeit von Partikelmaterial, Partikelmaterialzusätzen, mittlerem Partikeldurchmesser, Partikeldurchmesserverteilung, Fließfähigkeit des Partikelmaterials verändert bzw. eingestellt.

"Leitmittel für die Luftstromführung" bedeutet im Sinn der Offenbarung jedes geeignete Mittel, um einen Luftstrom in der Vorrichtung gezielt in oder/und durch den Bauraum zu leiten, z.B. fallen darunter Bleche, Schläuche, Kunststoffformteile, Metallformteile, etc.

Unter "Baueinheiten" sind gemäß der vorliegenden Erfindung alle Einheiten zu verstehen, die zum Aufbau des Formteils notwendig und die über dem Baufeld zumindest teilweise angeordnet sind. Dies sind beispielsweise der Recoater, der Drucker, ggf. auch das Energieeintragsmittel, usw.. Gemäss der vorliegenden Erfindung handelt es sich hier meist um Einheiten, die in einem definierten Abstand zur aufzutragenden Partikelmaterialschicht angeordnet sein müssen.

Ein "Reflektormittel" im Sinne der vorliegenden Erfindung ist ein Strahlung reflektierendes Bauteil, beispielsweise ein Blech oder eine Folie, welches die Strahlung der eingesetzten Energieeintragsmittel örtlich lenkt und so eine gleichmäßige Bestrahlung bestimmter Oberflächen sowie das Vermeiden von Wärmeverlusten in Form von unerwünschter Abstrahlung ermöglicht.

Verschiedene Aspekte der Erfindung werden im Folgenden beschrieben.

Die Erfindung betrifft in einem Aspekt ein Verfahren zum Herstellen von dreidimensionalen Bauteilen, wobei Partikelmaterial schichtweise auf ein Baufeld aufgetragen wird, selektiv ein Absorber aufgebracht wird, die Bereiche mit Absorber über einen Energieeintrag verfestigt werden und die Schritte solange wiederholt werden bis das oder die dreidimensionalen Bauteile erhalten wurden, wobei das Partikelmaterial mittels Recoater aufgebracht wird und der Absorber mit einem Druckkopf selektiv aufgebracht wird, das Partikelmaterial mittels Energieeintragsmittel verfestigt wird, wobei der Recoater ein Schwingklingenrecoater ist, der eine Temperatur von 70 °C bis 155 °C aufweist, das Partikelmaterial durch Erzeugen einer Partikelmaterialwalze in Beschichtungsrichtung vor dem Recoater aufgetragen wird, der Durchmesser der Partikelmaterialwalze einstellbar ist, und das Partikelmaterial beim Auftragen auf das Baufeld mittels Energieeintragsmittel auf eine Temperatur von 155 °C bis 180 °C erwärmt oder gehalten wird.

Mit dem erfindungsgemäßen Verfahren wurde eine besonders vorteilhafte Kombination von verschiedenen Verfahrensbedingungen gefunden, die in überraschender Weise zu sehr vorteilhaften Verfahrensergebnissen führt und die Herstellung von qualitativ hochwertigen 3D-Formteilen im HSS Verfahren erlaubt.

Vorzugsweise wird das Baufeld vor jedem Partikelmaterialauftrag um eine definierte Strecke abgesenkt. Ebenso ist es möglich, dass die Baueinheiten, also die Einheiten die zum Aufbauen des Partikelmaterials notwendigerweise in einem definierten Abstand zum Baufeld angeordnet sind, um eine definierte Strecke angehoben werden, wobei vorzugsweise diese definierte Strecke der Schichtdicke das aufgetragenen Partikelmaterials entspricht.

Es wird ein mit den anderen Verfahrensbedingungen geeigneter Absorber verwendet, wobei der Absorber vorzugsweise eine Flüssigkeit ist, die vorzugsweise eine ölbasierte Tinte ist und die Kohlenstoffpartikel enthält. Ein Beispiel für eine geeignete Tinte ist SunChemical Jetstream PC07774 B.

Es wird vorzugsweise ein partikelförmiges Baumaterial mit einer mittleren Korngröße von 50 - 60 μm, vorzugsweise 55 μm, einer Schmelztemperatur von 180 - 190 °C, vorzugsweise von 186 °C und/oder einer Rekristallisationstemperatur von 140 - 150 °C, vorzugsweise von 145 °C, in dem erfindungsgemäßen Verfahren verwendet. Beispiele derartiger Baumaterialien sind die Polyamid12-Baumaterialien PA2200® oder Duraform PA®.

Der Zyklus des Schichtauftrages wird dabei in Übereinstimmung mit den anderen Verfahrensparametern ausgewählt und ein vollständiger Zyklus eines Schichtauftrags beträgt beispielsweise 20 bis 40 s. Unter "vollständiger Zyklus eines Schichtauftrags" ist dabei der Ablauf zu verstehen, bei dem Beschichter und Druckeinheit jeweils über die gesamte Fläche des Baufeldes verfahren.

Die Basistemperatur wird vorteilhafter Weise auf 145°C bis 186°C eingestellt, vorzugsweise auf 160°C bis 180°C und/oder die Sintertemperatur wird auf 175°C bis 220°C, vorzugsweise auf 190°C bis 210°C, eingestellt.

Der verwendete Absorber ist gemäss bevorzugter Ausführungsform eine Flüssigkeit, vorzugsweise eine ölbasierte Tinte, die Kohlenstoffpartikel enthält, z.B. SunChemical Jetstream PC07774 B, wobei vorzugsweise der Absorber strahlungsabsorbierende Bestandteile, Weichmacher für das Partikelmaterial oder/und ein oder mehrere Stoffe zur Störung der Rekristallisierung umfasst.

Der Recoater weist dabei vorzugsweise eine oder mehrere Schwingklingen und ein Partikelmaterialreservoir auf. Dabei ist es vorteilhaft, wenn die Temperatur im Partikelmaterialreservoir des Recoaters auf 70 bis 155 °C eingestellt wird, vorzugsweise auf 80 bis 155 °C, mehr bevorzugt auf 130 bis 155 °C. Das Temperieren des im Recoater befindlichen Partikelmaterials kann mittels Heizelementen im oder am Recoater erfolgen.

Die Temperatur des Partikelmaterials beim Auftragen sollte vorzugsweise 80 bis 160 °C betragen, vorzugsweise 130 bis 155 °C.

Der Durchmesser der Partikelmaterialwalze beträgt nach einer bevorzugten Ausführungsform der Erfindung 1 bis 8 mm, vorzugsweise 2 bis 6 mm, noch mehr bevorzugt 3 bis 5 mm.

Dabei kann es vorteilhaft sein, wenn die Partikelmaterialwalze in ihren Dimensionen während des Partikelmaterialaufbringens im Wesentlichen konstant gehalten wird. Noch weiter bevorzugt wird die Temperatur in der Partikelmaterialwalze während des Partikelmaterialaufbringens konstant gehalten.

Vorzugsweise wird am oder im Bereich des Recoaters ein Energieeintragsmittel verwendet, das vorteilhafterweise auch verfahrbar sein kann.

Der Energieeintrag kann mit einem über dem Baufeld befindlichen Energieeintragsmittel und/oder einem hinter dem Recoater angeordneten verfahrbaren Energieeintragsmittel erfolgen. Gemäß einer bevorzugten Ausführungsform kann der Energieeintrag mittels Energieeintragsmittel nach dem Auftragen des Partikelmaterials erfolgen.

Dabei kann das Energieeintragsmittel beispielsweise ein Overheadstrahler oder/und eine IR-Lampe sein.

Gemäß einer besonders bevorzugten Ausführungsform der Erfindung wird der Overheadstrahler so eingestellt, dass im Bauraum eine Temperatur von 30 bis 180 °C herrscht. Vorzugsweise werden die Temperaturbedingungen so geregelt, dass im aufgetragenen Partikelmaterial eine Temperatur von 160 °C bis 190 °C, vorzugsweise 180 °C bis 190 °C, eingestellt werden.

Vorzugsweise wird bei einem erfindungsgemäßen Verfahren Partikelmaterial mittels Recoater aufgetragen, anschließend Absorber selektiv mittels einem oder mehrerer Druckköpfe aufgebracht, der Energieeintrag erfolgt mittels verfahrbarem und steuerbarem Energieeintragsmittel, vorzugsweise unmittelbar im Anschluss an das Aufbringen des Partikelmaterials oder/und des Absorbers, das Energieeintragsmittel wird nach dem Recoater über das Baufeld verfahren, oder/und vor dem Auftragen des Partikelmaterials erfolgt eine Vorbelichtung mittels Energieeintragsmittel, und gegebenenfalls erfolgt der Energieeintrag zusätzlich mittels einem weiteren über dem Baufeld befindlichen Energieeintragsmittel, wobei dieses steuerbar oder während des gesamten Verfahrens in Betrieb ist.

Nach einer besonders bevorzugten Ausführungsform der Erfindung wird zur Einstellung einer gewünschten Temperatur im Bauraum ein Gasstrom, vorzugsweise ein Luftstrom, durch den Luftraum des Bauraumes geleitet.

Dabei kann der Luftstrom mittels Leitmitteln von oben oder/und seitlich in den Bauraum geleitet werden, im Wesentlichen über das Baufeld geleitet werden oder über ihm zirkulieren und nach oben oder/und seitlich wieder aus dem Bauraum austreten.

Vorzugsweise sollte die Temperatur im Bauraum auf 30°C bis 60°C, vorzugsweise auf 30°C bis 40°C, eingestellt werden. Man könnte hierbei davon sprechen, dass man einen kalten Bauraum generieren möchte. Diese Aspekte des kalten Bauraumes können auch beim bekannten Verfahren des Lasersintern angewendet werden. Hierzu wird der Fachmann die ihm vom Lasersintern bekannten Modifikationen im Verfahren und den nötigen Vorrichtungsmerkmalen vornehmen, die ihm bekannt sind. Entsprechend wir er eine Laserlampe zum Verfestigen des Partikelmaterial einsetzen.

Ein solcher kann dadurch erreicht werden, dass beispielsweise Luftführungen im Bauraum vorgesehen sind.

Dabei käme in einer Ausführungsform eine konstante, durchflussgesteuerte Absaugung (Anemometer) und Steuerung der Absaugung (z.B. MKFVA320 der Fa. Fuchs Umwelttechnik) in Betracht. Weiterhin könnte der kalte Bauraum dadurch erreicht oder unterstützt werden, dass eine klar definierte Luftführung in der Prozesskammer vorgesehen ist. Auch Bleche des Overhead-Strahlers können als Konvektionsschutz dienen.

Durch eine kontrollierte und gezielte Vorwärmung des Partikelmaterials erst im Beschichter, wobei die Partikelmaterialmenge gering und konstant ist, kann eine unnötige Erwärmung des Bauraumes vermieden werden.

Auch kann die Beheizung der Pulveroberfläche mittels spezieller Anordnung der Overhead-Strahler ausgeführt werden, wobei angepasste, berechnete Reflektoren eingesetzt werden. Die Folge ist erheblich weniger Abgabe von Verlustwärme in den Bauraum.

Die Bestrahlung der Pulveroberfläche mit Sinterstrahler kann optimiert werden, indem Reflektoren, richtige Wellenlänge bzw. monochromatischer Strahler, genaue zeitliche Abstimmung der Maschinensteuerung (= Minimierung der Zeit in der der Sinter-Strahler aktiv ist), berücksichtigt werden.

Wenn eine Baufeldheizung (Boden und Wände) in der Jobbox eingesetzt wird, ist die Vorheizzeit von Metallwänden geringer als Luft im Bauraum. Die Prozesskammerwände können geometrisch derart ausgeführt sein, dass das Strahlungsgleichgewicht (Kirchhoffsches Strahlungsgesetz) zu minimalem Wärmeverlust auf Pulveroberfläche führt.

Wird das Beschichtersystem in zwei voneinander getrennt bewegbaren Achsen ausgeführt, jeweils eine für Aufbringung von Partikelmaterial (Recoaterachse) und Absorber (Druckkopfachse), dann ist auch die Abdeckzeit der Overheadstrahler gering, wodurch wiederum Wärmeverluste durch Aufheizung von Maschinenelementen (Achssystem) gering gehalten werden. Durch die kürzere Abdeckzeit der Overheadstrahler kühlt das Baufeld vorteilhafter Weise nicht so stark aus und muss dann nicht wieder mittels Energieaufwand nicht so stark aufgeheizt werden. Somit ergibt sich ein Vorteil in der Wirschaftlichkeit der Maschine und des Verfahrens.

In einem weiteren Aspekt betrifft die Erfindung eine Vorrichtung zum Durchführen eines Verfahrens nach der Erfindung.

In einem noch weiteren Aspekt betrifft die Erfindung eine Vorrichtung zum Durchführen eines 3D-Druckverfahrens, die aufweist: a. ein Baufeld, b. einen Schwingklingenrecoater mit Heizelement, c. einen Druckkopf, d. ein oder mehrere Energieeintragsmittel, wobei am oder neben dem Recoater ein Energieeintragsmittel zusammen mit diesem verfahrbar angebracht ist und vorzugsweise Leitmittel zum Einstellen der Bauraumtemperatur mittels Luftstromdurchführung durch den Bauraum vorgesehen sind.

Gemäß der vorliegenden Erfindung kommt ein Schwingklingenrecoater in einem schichtaufbauenden Sinterverfahren zum Einsatz. Optional ist das mitgeführte Pulverreservoir mit einer geregelten Widerstandsheizung ausgeführt, sodass das Pulver unmittelbar vor dem Auftrag kontrolliert temperiert werden kann.

Vorzugsweise befindet sich im Recoater nur eine geringe Pulvermenge und ca. alle 10 Schichten wird der Recoater aus einem ortsfesten großen Pulverreservoir, welches nicht beheizt werden muss, aufgefüllt.

Der Auffüllrhythmus kann verändert werden. Beispielsweise wäre eine Auffüllung auch nach jeder Schicht möglich, z.B. damit die Pulvermenge im mitgeführten Pulverbehältnis am Beschichter bei jeder Schicht gleich bleibt und somit keine Temperaturschwankungen innerhalb der auf den Bauraum aufgebrachten Schicht entstehen.

Der Beschichter weist einen Spalt auf, durch welchen Pulver herausfließt, sobald die Schwingklinge vibriert. Dieser Spalt ist mit einfachen Werkzeugen in der Größe veränderbar, sodass bei Verwendung unterschiedlicher Partikelmaterialien keine Maschinenteile ausgetauscht werden müssen.

Dabei können die zwei Energieeintragsmittel über dem Baufeld fest oder/und verfahrbar angebracht sein. Vorzugsweise ist ein Energieeintragsmittel verfahrbar an oder neben dem Schwingklingenrecoater vorgesehen.

Ein Energieeintragsmittel kann beispielsweise ein Overheadstrahler, vorzugsweise ein Overhead-Keramikheizelement, und ein Energieeintragsmittel beispielsweise ein IR-Strahler sein.

Vorzugsweise kann ein oder mehrere Reflektormittel oberhalb von Baufeld und Energieeintragsmittel angebracht sein.

Die Erzeugung des Hubs des Schwingklingenrecoaters kann vorzugsweise mittels einer Exzenterwelle erfolgen oder/und der Hub 0,05 - 0,3 mm, vorzugsweise 0,15 mm, betragen oder/und die Schwingfrequenz zwischen 30 Hz und 150 Hz betragen oder/und die Schwingfrequenz elektronisch steuerbar sein. Bevorzugt sind 50 bis 80 Hz.

Wenn die Schwingfrequenz des Beschichters elektronisch eingestellt wird, so kann die Pulver-Ausflussmenge während des Beschichtungsvorgangs gezielt beeinflusst werden. Es ergibt sich in guter Näherung ein linearer Zusammenhang zwischen Pulverausfluss und Frequenz. Somit lässt sich bei Wechsel zu einem Partikelmaterial, das sich in den rheologischen Eigenschaften unterscheidet, eine Anpassung mittels Software-Voreinstellungen eingehen, ohne mechanisch eingreifen zu müssen.

In der nachfolgenden Tabelle sind beispielhaft Werte für bevorzugte Schwingfrequenzen aufgeführt:

| Partikelmaterial (d50 = 55$\mu$m) | EOS PA2200 | Duraform HST | Evonik PA12 ohne Rieselhilfe |
|---|---|---|---|
| Pulverwalze Durchmesser [mm] | 2-4 | 1 -3 | 3-5 |

(fortgesetzt)

| Partikelmaterial (d50 = 55$\mu$m) | EOS PA2200 | Duraform HST | Evonik PA12 ohne Rieselhilfe |
|---|---|---|---|
| Amplitude/Hub [mm] | | konstant bei 0,1-0,2 | |
| Temperatur [°C] | | 70-80 °C | |

| Partikelmaterial (d50 = 55$\mu$m) | EOS PA2200 | Duraform HST | Evonik PA12 ohne Rieselhilfe |
|---|---|---|---|
| Frequenz [Hz] bei Pulverwalze 4mm | 45-55 | 55-65 | 40-50 |
| Amplitude/Hub [mm] | konstant bei 0,1-0,2 | | |
| Temperatur [°C] | 70-80 °C | | |

Weiterhin kann die Winkellage des Pulverauslasses des Beschichters verändert werden, wodurch eine unterschiedlich starke Kompression des Pulvers beim Schichtauftrag erfolgen kann (Kraftwirkung nach unten möglich). Derart lässt sich die Fülldichte der erstellten Formkörper beeinflussen.

Bei einem Verfahren und einer Vorrichtung nach der Erfindung bleibt Das aus dem Beschichterspalt austretende Partikelmaterial, die sog. Pulverwalze, während des Schichtauftrags in seiner Menge (und in Falle eines bei beheizten Reservoirs ebenfalls in der Temperatur) stets konstant. Dadurch bleibt der Wärmeabfluss von heißerer Baufeldoberfläche zu in der Regel kältere Pulverwalze während des Beschichtens konstant. Es ergibt sich daher im Vergleich zum Stand der Technik kein Verlauf der Temperatur auf der Pulveroberfläche aufgrund des Schichtauftrags. Somit ergeben sich für die zu erstellenden Formkörper auch identische physikalische und geometrische Eigenschaften, unabhängig von deren Lage im Baufeld.

Aufgrund der gleichbleibenden Größe der Pulverwalze bleibt ebenso die Kraftwirkung auf die Pulveroberfläche des Bauvolumens während des Schichtauftrags konstant.

Bei einer Abstimmung der Spaltgröße und der Vibrationsfrequenz kann die Menge an austretendem Pulver während des Beschichtungsprozesses möglichst gering gehalten werden (= kleine Pulverwalze). Derart ist die Kontaktfläche mit der Bereits aufgetragenen Pulvermenge vorheriger Schichten gezielt minimierbar. Wärmeaustrag vom Bauvolumen weg, sowie Scherkräfte können damit gering gehalten werden. Dies gestaltet den Vorgang des Schichtauftrags weniger fehleranfällig, erhöht den Verbund der einzelnen Schichten untereinander, was zu einer besseren Festigkeit des Formkörpers führt (z.B. Erhöhung der Bruchdehnung um den Faktor 1,5).

Da Partikelmaterial nur ausfließt, sobald der Beschichter in Vibration versetzt wird und diese elektrisch geschaltet werden kann, kann gezielt nur dort Partikelmaterial aufgebracht werden, wo dies auch gewünscht ist.

Treten Fehler bei der Beschichtung auf, wird z.B. ein Teil der Fläche nicht mit Partikelmaterial bedeckt, wird dies ohne Eingreifen eines Regelmechanismus automatisch beim Auftrag der nächsten Schicht ausgeglichen, da dann zwar die Menge des Partikelmaterials der Pulverwalze zwar zunächst abnimmt, aber nur solange, bis der Spalt nicht mehr abgedeckt wird und somit Partikelmaterial aus dem mitgeführten Behältnis nachläuft. Da sich beide Vorgänge im Gleichgewicht halten, stabilisiert sich der Schichtauftrag im Fehlerfall selbstständig.

Die Erzeugung des Hubs des Schwingklingenrecoaters kann dabei elektrisch, elektrodynamisch, elektrostatisch, pneumatisch, hydraulisch oder/und mit einem Linearmotor erzeugt werden.

Besonders bevorzugt wird die Erzeugung des Hubs des oder/und ist dieser als Tauchspule ausgeführt oder/und ist dieser über frequenzabhängige Strom-Spannungs-Analyse oder/und mittels eines Beschleunigungssensors auf konstanten Hub und Frequenz geregelt oder/und sind Hub und Frequenz elektronisch einstellbar ausgeführt.

Mit den oben dargestellten Verfahrensparametern in der dargestellten Kombination konnten überraschender Weise sehr vorteilhafte Verfahrensergebnisse erreicht werden.

Mit dem erfindungsgemäßen Verfahren und der Vorrichtung werden die oben ausgeführten Probleme oder Nachteile zumindest vermindert oder ganz vermieden. Der Konstruktions- und Materialaufwand kann verringert werden und empfindliche Komponenten (Druckkopf, Sensoren etc.) können geschützt werden.

Weiterhin wird der Aufwand für Gewährleistung der Maschinensicherheit minimiert. Konstruktions- und Materialaufwand wird gering gehalten.

Darüberhinaus werden die Druckbedingungen während des gesamten Aufbauprozesses stabil gehalten.

Eine Kühlung des Absorberfluids ist möglich, ohne dass eine Kondensation an der Druckkopf-Dosiereinheit auftritt, denn das Absorberfluid kann auf konstanter, geringer Temperatur gehalten werden. Dies ermöglicht einen stabilen Verarbeitungsprozess (Viskosität, Chemische Stabilität).

Die Tinte kann konstant auf rel. niedriger Temperatur gehalten werden (ca. 40°C bis 50°C). Dadurch erhält man gleichbleibende Bauteileigenschaften, denn die rheologischen Eigenschaften einer Tinte sind temperaturabhängig. Bei erhöhter Temperatur kann sich z.B. der Tinteneintrag vergrößern oder die Druckqualität nimmt ab.

Durch die nun möglichen kurzen Maschinen-Aufheizzeiten bleiben die Bauteileigenschaften ebenfalls während des gesamten Druckjobs annähernd gleich.

Das Baumaterial kann in jeder geeigneten Form und mit der Vorrichtung auftragbaren Mitteln vorliegen. Die für das Verfahren verwendete Vorrichtung kann mit geeigneten Mitteln und baulich mit bekannten Mitteln an die Baumaterialien angepasst werden. Vorzugsweise wird das Baumaterial als Pulver oder als Dispersion verwendet.

Weitere Aspekte der Offenbarung werden im Folgenden ausgeführt.

Das Verfahren nach dem Stand der Technik besteht aus den Schritten Schichterzeugen, Bedrucken, Belichten mit Strahlung und Absenken. Der erste Schritt ist analog zur Schichtbildung beim bekannten pulverbasierten-3D-Drucken. Pulver wird vor eine Klinge gebracht, auf eine Bauplattform aufgebracht und mit der Klinge glattgestrichen. Die Positionen der Bauplattform bei zwei aufeinanderfolgenden Beschichtungsvorgängen bestimmt dabei die Schichtstärke.

Im Anschluss wird die Schicht bedruckt. Beim hier genannten Verfahren werden Flüssigkeiten mit einem Tintenstrahldruckkopf aufgebracht. Ein Teil der Flüssigkeit ist ein Absorber, der bei Einwirkung einer Strahlung lokal eine Erwärmung des Pulvers verursacht. Alternativ kann der Absorber auch ein Pulver, vorzugsweise ein Carbontoner, sein, das in geeigneter Weise selektiv aufgebracht wird.

Die so bedruckte Schicht wird jetzt mit einer Strahlungsquelle überstrichen und damit selektiv erwärmt. Dabei wird das komplette Pulver von der Strahlungsquelle erhitzt. Besonders aber in aktivierten Bereichen steigt die Temperatur derart an, dass die Partikel beginnen, zu sintern und sich damit zu verbinden.

Nach diesem Schritt wird das Baufeld um eine Schichtstärke abgesenkt. Dann werden alle oben genannten Schritte wiederholt oder gegebenenfalls die Beschichtungselemente angehoben bis das gewünschte Bauteil entstanden ist.

Im Folgenden wird die vorliegende Erfindung anhand von Beispielen näher erläutert, die bevorzugte Ausführungsformen darstellen.

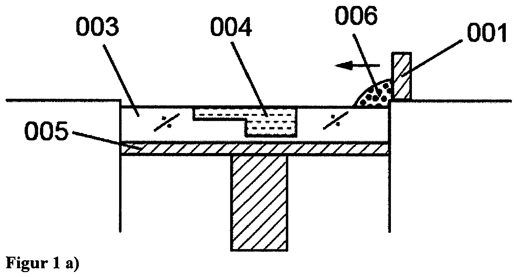

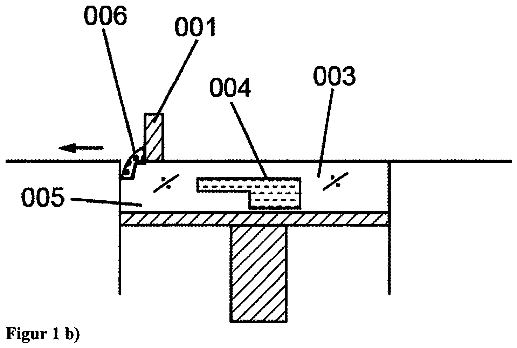

In Fig. 1 ist eine Vorrichtung zum Partikelmaterialauftrag mit einem Klingenbeschichter (001) nach dem Stand der Technik dargestellt. Zu Beginn des Beschichtungsvorgangs, siehe Fig. 1a steht der Klingenbeschichter am Rand des Baufeldes auf einer Bauplattform (005), um Partikelmaterial (003) aufzutragen, aus dem ein Formkörper gebildet werden soll. Vor dem Klingenbeschichter (001) bildet sich eine Pulverwalze (006) aus. In Fig. 1b ist der Beschichtungsvorgang gegen Ende einer Beschichterfahrt dargestellt. Es ist deutlich erkennbar, dass die Pulverwalze (006) kleiner geworden ist.

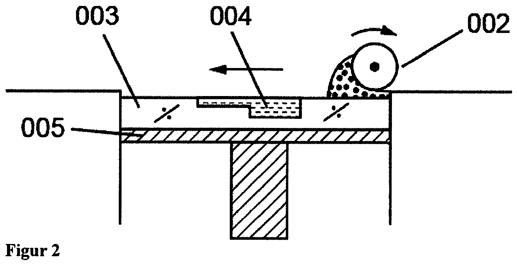

Eine weitere Vorrichtung nach dem Stand der Technik zum Auftragen von Partikelmaterial (003) ist in der Fig. 2 dargestellt. Anstelle des Klingenbeschichters wird hier ein Rollenbeschichter (002) verwendet.

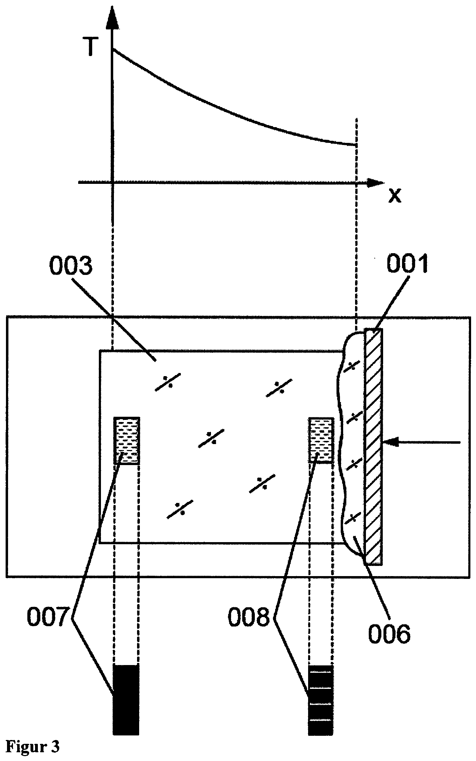

Die Fig. 3 zeigt eine Darstellung des Temperaturverlaufs auf der Partikelmaterialoberfläche bei Verwendung einer Beschichtervorrichtung nach dem Stand der Technik. Es ist dabei auch eine Ansicht der Partikelmaterialoberfläche (009) von oben und ferne sind resultierende Formkörper (004) in Seitenansicht dargestellt. Es lässt sich folgern, dass bei geringerer Temperatur Formkörper mit mangelhaftem Schichtverbund (008) die Folge sind, während bei höheren Temperaturen die Formkörper einen hohen Schichtverbund (007) aufweisen.

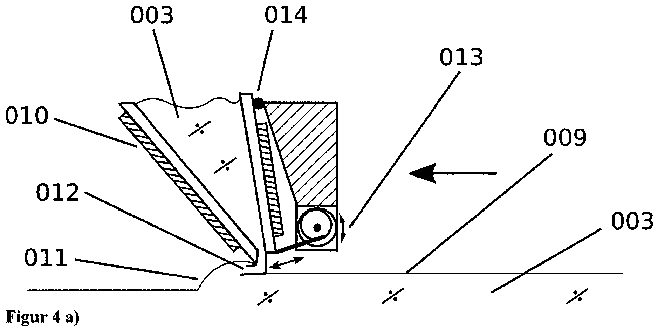

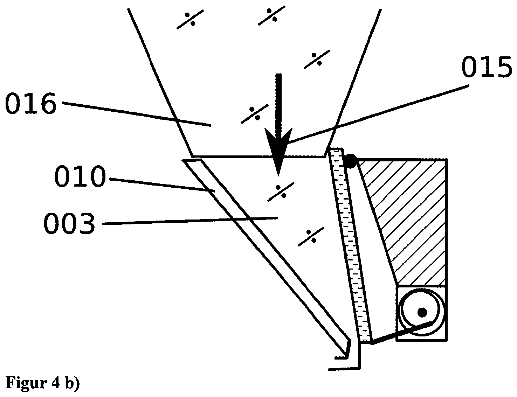

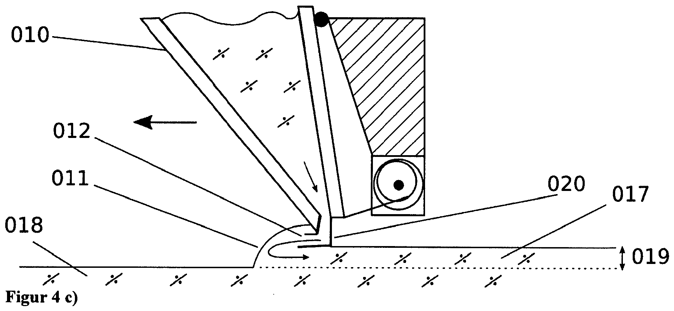

Eine detaillierte schematische Darstellung der Vorrichtung nach einer bevorzugten Ausführungsform der Erfindung des Schwingklingenbeschichters ist in Fig. 4 dargestellt. Es handelt sich bei dem gezeigten Beispiel um eine Vorrichtung zur PartikelmaterialBeschichtung mittels eines beheizten Schwingklingenrecoaters.

In Fig. 4 a) ist eine Vorrichtung zur Partikelmaterialbeschichtung beispielhaft schematisch dargestellt. Die Skizze zeigt einen Schwingklingenrecoater während des Partikelmaterialauftrags. Dieser ist im Wesentlichen konstruktiv dadurch gekennzeichnet, dass er ein Behältnis aufweist, dass das aufzubringende Partikelmaterial (003) beinhaltet, welches mittels der Drehbewegung eines Exzenters (013) mit einem Hub in Millimeter zwischen 0,02 bis 0,3, bevorzugt zwischen 0,05 bis 0,2, besonders bevorzugt zwischen 0,07 und 0,15, in Schwingung versetzt wird. Das Drehgelenk (014) kennzeichnet dabei den Rotationsmittelpunkt der Schwingungsbewegung. Das mitgeführte Partikelmaterial (003) wird dadurch mit in Vibration versetzt, wodurch sich die Fließfähigkeit stark erhöht. Somit kommt es zum Ausfluss des Partikelmaterials (003) aus dem Vorratsbehältnis, solange, bis das ausgeflossene Pulver den Spalt (012) mittels der entstehenden Pulverwalze (011) bedeckt. Wird nun der Beschichter in Pfeilrichtung über die abgesenkte Bauplattform (005) bewegt, wird der Abstand zwischen Beschichter und Pulveroberfläche (009) mittels Partikelmaterial (003) der mitgeführten Pulverwalze (011) gefüllt. Die Menge des Partikelmaterials (003) der Pulverwalze (011) nimmt somit solange ab, bis der Spalt (012) nicht mehr abgedeckt wird und somit Partikelmaterial (003) aus dem mitgeführten Behältnis nachläuft. Da sich beide Vorgänge im Gleichgewicht halten, bleibt die Größe der Pulverwalze (011) stets konstant. Der Vorrat des Partikelmaterials (003) wird weiterhin mittels einer Widerstandsheizung (010) auf konstanter erhöhter Temperatur gehalten, bevorzugt zwischen 80°C und 180°C, besonders bevorzugt zwischen 90°C und 170°C, besonders bevorzugt zwischen 130°C und 150°C. Aufgrund konstanter Ausflussmenge aus dem Partikelbehältnis und somit konstanter Größe der Pulverwalze während des Beschichtungsvorgangs, ist der Wärmeaustrag aufgrund Temperaturdifferenz zur Partikelmaterialoberfläche (009) stets konstant. Ein Zusatz eines Fließmittels zum Partikelmaterial wie es nach dem Stand der Technik häufig beigefügt wird, entfällt hierdurch, was Handhabung und Stabilität des Beschichtungsvorgangs verbessert, da somit Fehler in der Materialdosierung z.B. durch Verklumpung stark verringert werden.

Fig. 4 b) zeigt eine Vorrichtung zur Befüllung des Partikelmaterial-Beschichters mittels Niveaubefüllung (015). Dabei ist die Befüllung des Partikelreservoirs des Schwingklingenbeschichters schematisch skizziert. Dabei handelt es sich um eine sog. Niveaubefüllung (015). Nicht-temperiertes Partikelmaterial (016) aus dem Reservoir, das sich bevorzugt an der gleichen Position in der Vorrichtung befindet, wie die Ruheposition des Schwingklingenbeschichters, fließt dabei solange in das vom Beschichter mitgeführten Behältnis, bis dieses vollständig gefüllt ist. Die Befüllung findet vorzugsweise während des Aufbringens des Absorbers mittels Druckkopfachse statt, sodass hiermit kein Zeitverlust entsteht. Der Vorteil der Niveaubefüllung liegt darin begründet, dass diese dazu führt, dass immer die gleiche Menge an Partikelmaterial nachgefüllt wird. Somit bleibt ohne Regelaufwand die Verweilzeit des Partikelmaterials im mitgeführten Behältnis konstant, was aufgrund einer konstanten Heizrate des Behältnisses zu einer zeitlich konstanten Temperatur des Partikelmaterials führt. Die Größe des Behältnisses am Beschichter, welches das Partikelmaterial (003) mit sich führt ist bevorzugt so gewählt, dass dieses Material für den mehrmaligen Schichtauftrag aufnehmen kann. Ebenso ist die Wiederauffüllrate in Ruhepostition bevorzugt höher zu wählen, als der Materialausfluss aufgrund der Dosierrate des Beschichters, sodass garantiert ist, dass die Verweilzeit des Partikelmaterials im Beschichter ausreicht, um dieses homogen auf die gewünschte Temperatur zu bringen.

In Fig. 4c) ist eine detaillierte Ausführung der Bewegung des Partikelmaterials während des Beschichtungsvorgangs gezeigt. Auf der Bauraumoberfläche (018) wird eine neue Partikelmaterialschicht (019) aufgetragen mit Hilfe einer Nivellierklinge (020).

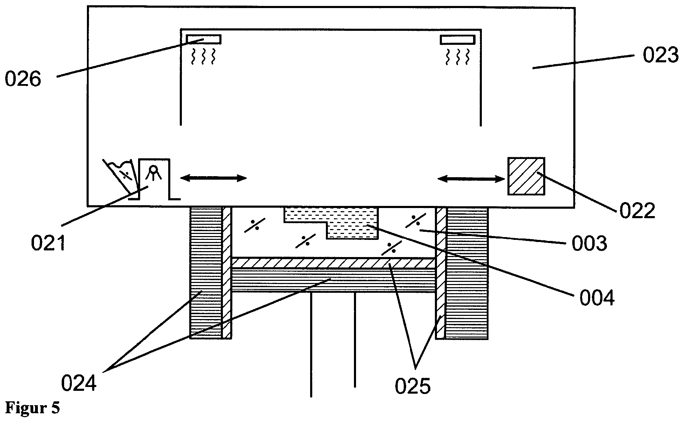

Eine Vorrichtung zum Herstellen von dreidimensionalen Bauteilen (004) in einer kalten Prozesskammer (023) ist in Fig. 5 vereinfacht schematisch dargestellt. Die benötigte Temperierung der Oberfläche des Partikelmaterials (003) erfolgt dabei mittels folgender Elemente: Eine geregelte Widerstandsheizung (025) sorgt für eine zeitlich und räumlich konstanten Temperatur von 170°C innerhalb des aufgetragenen Partikelmaterials (003), z.B: ein PA12, vorzugsweise PA2200 oder Duraform PA, inklusive des bereits erzeugten Teils des Formkörpers (004). (024) bezeichnet schematisch eine Wärmeisolierung. Ein Overhead-Strahler (026) stellt dabei zeitlich und räumlich die homogene Verteilung der Oberflächentemperatur von 170°C des Partikelmaterials sicher. Die Beschichtereinheit (021) ist bevorzugt mittels einer Widerstandsheizung ausgeführt, um in einem Behältnis mitgeführtes Partikelmaterial vor dem Schichtauftrag vorzuheizen. Der Druckkopf (022) befindet sich dabei in Ruheposition außerhalb des Einflusses der Heizelemente innerhalb der Prozesskammer (023), welche eine Temperatur von 40°C aufweist.

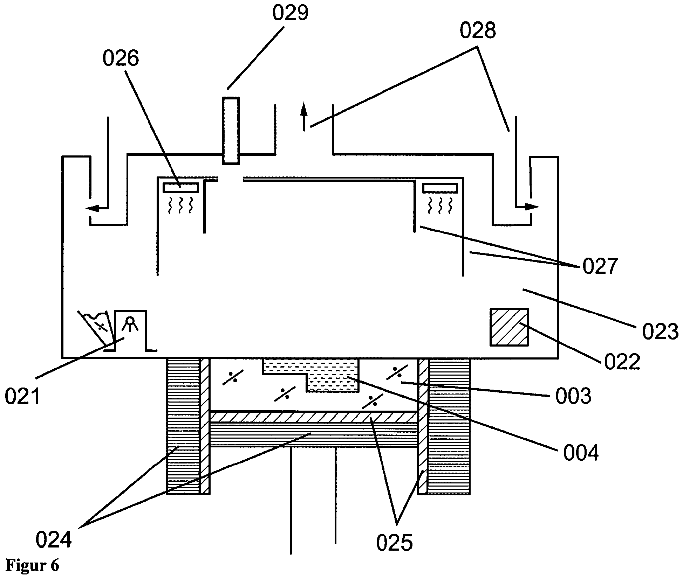

Fig. 6 zeigt detaillierter eine Luftführung (028) in der Prozesskammer (23), sowie Reflektoren bzw. den Konvektionsschutz (027), ausgeführt als Teil der Overhead-Strahler-Aggregate (026). Ein Pyrometer (029) misst einmal pro Schicht die Temperatur der Pulveroberfläche und regelt die Leistung der Overhead-Strahler, sodass eine konstante Temperatur auf dieser erzielt werden kann.

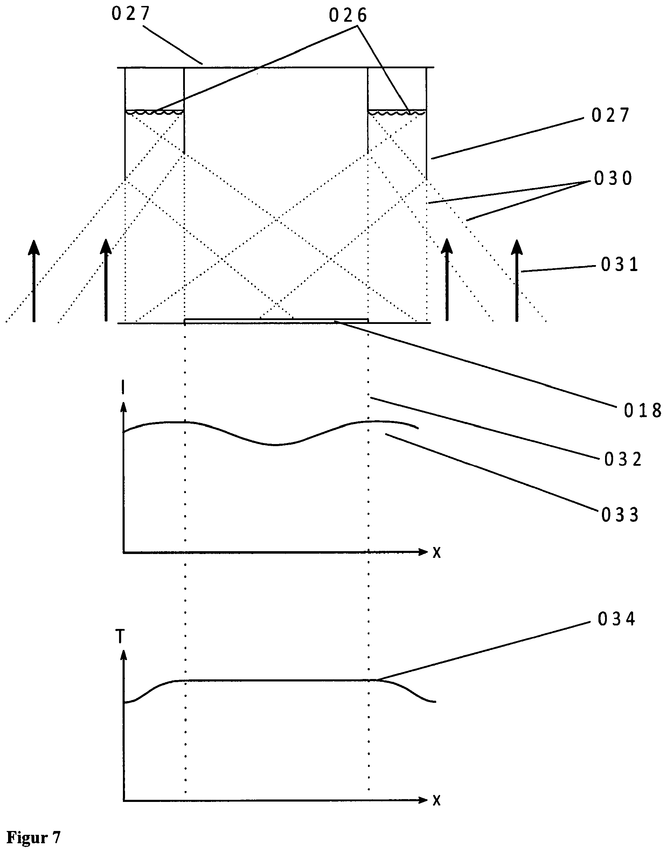

Ein möglicher Aufbau der Strahlreflektoren ist in Fig. 7 schematisch dargestellt. Der Strahlverlauf ist mit (030) skizziert, ebenso die dadurch resultierende Leistung (033) auf der Pulveroberfläche, wobei (032) den Rand dieser bezeichnet, sowie den Temperaturverlauf (034). Grund hierfür ist die Gültigkeit des Strahlungsgleichgewichts von absorbierter und emittierter Strahlung nach dem Gesetz von Kirchhoff:

$$\frac{L_{\Omega\nu}(\beta,\varphi,\nu,T)}{a'_{\nu}(\beta,\varphi,\nu,T)} = L^{o}_{\Omega\nu}(\nu,T)$$

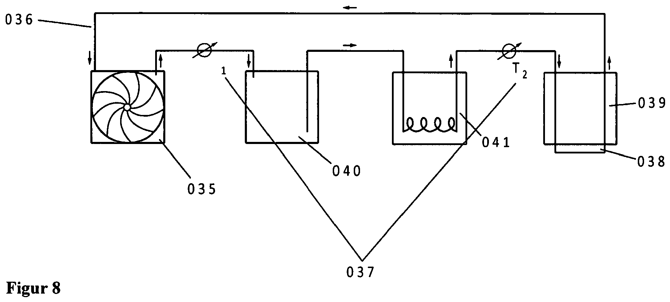

Fig. 8 zeigt schematisch ein System zur Temperierung des Absorberfluids. Das Absorberfluid wird im beschriebenen System während eines Bauprozesses stetig im Kreis geführt, damit eine homogene Temperatur des Fluids erreicht werden kann. Das Fluid wird dabei aus dem Fluidreservoir (040) über Fluidleitungen (036) zunächst durch ein Durchlauf-Heizelement (041) geführt, welches ab Beginn eines Bauprozesses eine Mindesttemperatur des Fluids gewährleisten kann. Danach wird der Absorber in den Druckkopf (039) geleitet und über ein Inkjet-Modul (038) selektiv auf das Baufeld aufgebracht. Das Fluid heizt sich durch die Temperaturen im Druckkopf auf und wird deshalb anschließend durch ein Kühlaggregat (035) geleitet. Anschließend wird das Fluid wieder dem Fluidreservoir zugeführt. Zur Kontrolle der Fluidtemperatur wird diese an der Zuleitung zum Druckkopf und an der Rückführung zum Fluidreservoir stetig mit Temperaturfühlern (037) gemessen.

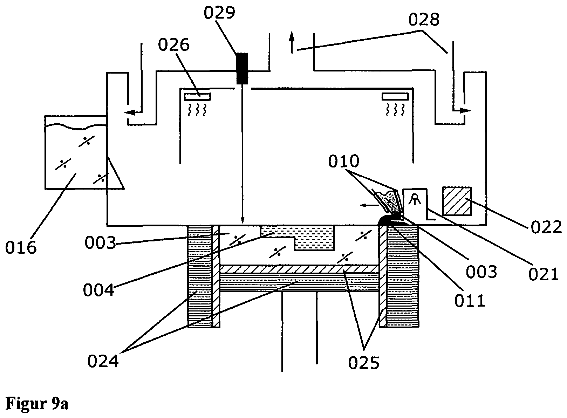

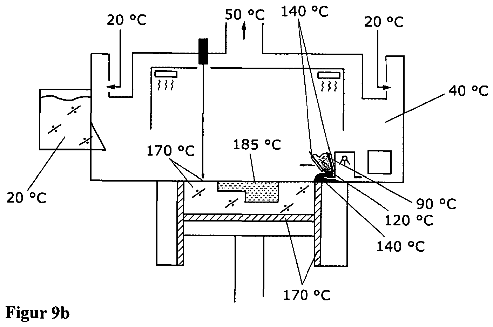

In Fig. 9 werden schematisch die Temperaturverhältnisse einer Vorrichtung zum Herstellen von dreidimensionalen Bauteilen nach Fig. 5 dargestellt. In Fig. 9a) werden die einzelnen Komponenten der Vorrichtung benannt, Fig. 9b) zeigt eine Übersicht der üblichen Temperaturen der einzelnen Komponenten während eines Bauprozesses. Die Funktion der einzelnen Komponenten wurde bereits in Fig. 5 beschrieben.

Im Baubehälter der Vorrichtung befinden sich loses Partikelmaterial (003) und Formkörper, welche während eines Bauprozesses üblicherweise Temperaturen von 170 °C annehmen. Die Oberfläche eines Formkörpers nimmt während des Energieeintrages kurzzeitig höhere Temperaturen an, welche bei etwa 185 °C liegen. Nach dem Energieeintrag und nachdem eine neue Schicht erzeugt wurde, gleicht sich die Temperatur des mit Absorber benetzten Formkörpers nach und nach der des ihn umgebenden Partikelmaterials an. Die Temperatur der Oberfläche des losen Partikelmaterials wird mit einem Pyrometer (029) gemessen und liegt wie das restliche lose Partikelmaterial bei 170 °C. Die Widerstandsheizung zur Temperierung des Baubehälters (025) hat ebenfalls eine Temperatur von 170 °C. Das nicht temperierte Partikelmaterial (016) im Vorratsbehälter weist eine Temperatur nahe der Raumtemperatur, also in etwa 20 °C auf. Der Schwingklingenrecoater mit sich daran befindendem Sinterstrahler (021) wird über eine Widerstandsheizung (010) auf eine Temperatur von beispielsweise 140 °C aufgeheizt. Das sich im Recoater befindende Partikelmaterial nimmt dadurch Temperaturen an, die von etwa 90 °C im oberen Teil des Recoaters, über 120 °C im mittleren Teil bis zu 140 °C in der austretenden Pulverwalze (011) reichen. Druckkopf (022) und Prozesskammer weisen während des Bauprozesses Temperaturen von etwa 40 °C auf. Die Isolierung (024) in Kombination mit der Widerstandsheizung hält den Baubehälter auf der gewünschten Temperatur. Die durch die Luftführung (028) eingebrachte Luft weist in etwa Raumtemperatur, also 20 °C auf. Wird die Luft wieder aus dem Bauraum geleitet, beträgt ihre Temperatur in etwa 50 °C.

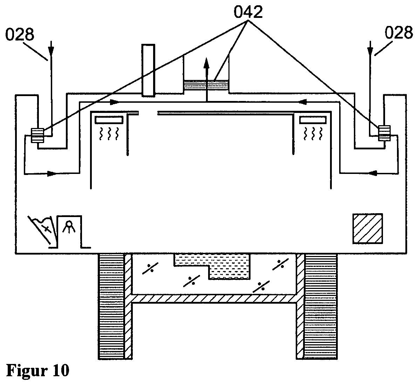

Fig. 10 stellt die Luftführung (028) in einer Vorrichtung zum Herstellen von dreidimensionalen Bauteilen genauer dar. Der Luftstrom wird beidseitig der Vorrichtung von oben eingeführt, wobei er mittels Anemometer (042) gemessen wird. Über Leitmittel wird der Luftstrom oberhalb der im oberen Teil der Vorrichtung fest angebrachten Energieeintragsmittel geleitet und mittig der Vorrichtung nach oben wieder abgeführt, wobei der Luftstrom wiederrum mittels Anemometer gemessen wird.

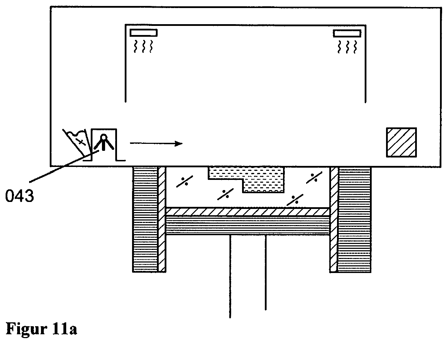

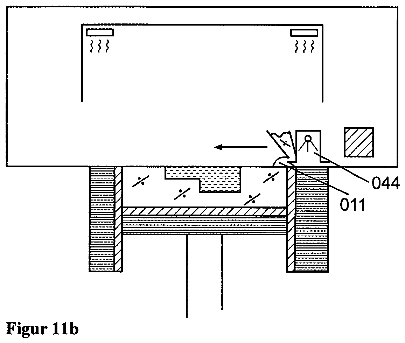

Fig. 11 zeigt eine Vorrichtung nach der Erfindung mit der Leistung eines Sinterstrahlers. Die Leistung während des Sintervorganges wird in Fig. 11a) dargestellt. Hierbei fährt der Klingenbeschichter, an welchem sich der Sinterstrahler befindet über eine Pulverschicht auf welche kurz zuvor Absorber aufgetragen wurde. Um den Sinterprozess und damit die Verfestigung eines Formkörpers auszulösen wird der Sinterstrahler mit der vollen Leistung (043) betrieben. Fig. 11b) zeigt die Leistung des Sinterstrahlers beim Recoaten. Hier wird über eine Pulverwalze (011) in Beschichtungsrichtung eine neue Schicht aufgetragen. Der sich hinter dem Beschichter befindende Sinterstrahler wird dabei mit reduzierter Leistung (044) betrieben, um das frisch aufgetragene Pulver sofort auf Prozesstemperatur zu bringen.

Bezugszeichenliste:

| | |
|---|---|
| 001 | Klingenbeschichter |
| 002 | Rollenbeschichter |
| 003 | Partikelmaterial |
| 004 | Formkörper |
| 005 | Bauplattform |
| 006 | Pulverwalze |
| 007 | Formkörper mit hohem Schichtverbund |
| 008 | Formkörper mit mangelhaftem Schichtverbund |
| 009 | Pulveroberfläche |
| 010 | Widerstandsheizung |
| 011 | Pulverwalze |
| 012 | Dosierspalt |
| 013 | Exzenter |
| 014 | Drehgelenk |
| 015 | Niveaubefüllung |
| 016 | Nicht-temperiertes Partikelmaterial |
| 018 | Bauraumoberfläche |
| 019 | Aufgetragene Schicht |
| 020 | Nivellier-Klinge |
| 021 | Schwingklingenrecoater mit Sinterstrahler |
| 022 | Druckkopf |
| 023 | Prozesskammer |
| 024 | Isolierung |
| 025 | Widerstandsheizung |
| 026 | Overhead-Strahler |
| 027 | Reflektorbleche/Konvektionsschutz |
| 028 | Luftführung |
| 029 | Pyrometer |

030 Strahlengang
031 Konvektion
032 Baufeldgrenze
033 Strahlungsintensität
034 Temperatur der Pulveroberfläche
035 Kühlaggregat
036 Fluidleitung
037 Temperaturfühler
038 Inkjet-Modul
039 Druckkopf
040 Fluid-Reservoir
041 Durchlauf-Heizelement
042 Anemometer
043 Sinterstrahler volle Leistung
044 Sinterstrahler reduzierte Leistung

**Patentansprüche**

1. Verfahren zum Herstellen von dreidimensionalen Bauteilen (004) wobei Partikelmaterial schichtweise auf ein Baufeld aufgetragen wird, selektiv ein Absorber aufgebracht wird, die Bereiche mit Absorber über einen Energieeintrag verfestigt werden und die Schritte solange wiederholt werden bis das oder die dreidimensionalen Bauteile erhalten wurden, wobei das Partikelmaterial (003) mittels Recoater (021) aufgebracht wird und der Absorber mit einem Druckkopf (022) selektiv aufgebracht wird, das Partikelmaterial mittels Energieeintragsmittel (026) verfestigt wird, **dadurch gekennzeichnet, dass** der Recoater ein Schwingklingenrecoater (021) ist, der eine Temperatur von 70 °C bis 155 °C aufweist, das Partikelmaterial (003) durch Erzeugen einer Partikelmaterialwalze (011) in Beschichtungsrichtung vor dem Recoater (001) aufgetragen wird, der Durchmesser der Partikelmaterialwalze (006) einstellbar ist, und das Partikelmaterial beim Auftragen auf das Baufeld mittels Energieeintragsmittel (010) auf eine Temperatur von 155 °C bis 180 °C erwärmt oder gehalten wird.

2. Verfahren nach Anspruch 1, wobei das Baufeld vor jedem Partikelmaterialauftrag um eine definierte Strecke abgesenkt wird oder Baueinheiten um eine definierte Strecke angehoben werden, wobei vorzugsweise diese definierte Strecke der Schichtdicke des aufgetragenen Partikelmaterials entspricht, vorzugsweise
wobei ein Partikelmaterial mit einer mittleren Korngröße von 50 - 60 μm, vorzugsweise 55 μm, verwendet wird, oder/und mit einer Schmelztemperatur von 180 - 190 °C, vorzugsweise von 186 °C, verwendet wird oder/und mit einer Rekristallisationstemperatur von 140 - 150 °C, vorzugsweise von 145 °C, verwendet wird, mehr bevorzugt ein Polyamid12, noch mehr bevorzugt PA2200® oder Duraform PA® verwendet wird, vorzugsweise
wobei der Absorber eine Flüssigkeit ist, vorzugsweise eine ölbasierte Tinte, die Kohlenstoffpartikel enthält, z.B. Sun Chemical IK821, wobei vorzugsweise der Absorber strahlungsabsorbierende Bestandteile, Weichmacher für das Partikelmaterial oder/und ein oder mehrere Stoffe zur Störung der Rekristallisierung umfasst, vorzugsweise wobei der Recoater eine oder mehrere Schwingklingen und ein Partikelmaterialreservoir aufweist, vorzugsweise
wobei die Temperatur im Partikelmaterialreservoir des Recoaters auf 70 bis 155 °C eingestellt wird oder/und
wobei die Temperatur des Partikelmaterials beim Auftragen auf 80 bis 155 °C eingestellt wird oder/und
wobei der Durchmesser der Partikelmaterialwalze von 1 bis 8 mm, vorzugsweise 2 bis 6 mm, noch mehr bevorzugt 3 bis 5 mm, beträgt, vorzugsweise
wobei die Partikelmaterialwalze in ihren Dimensionen während des Partikelmaterialaufbringens im Wesentlichen konstant gehalten wird, vorzugsweise
wobei die Temperatur in der Partikelmaterialwalze während des Partikelmaterialaufbringens konstant gehalten wird, vorzugsweise
wobei am oder im Bereich des Recoaters ein Energieeintragsmittel verwendet wird, das vorzugsweise verfahrbar ist.

3. Verfahren nach einem der vorhergehenden Ansprüche, wobei der Energieeintrag mit einem über dem Baufeld befindlichen Energieeintragsmittel und/oder einem hinter dem Recoater angeordneten verfahrbaren Energieeintragsmittel erfolgt.

4. Verfahren nach Anspruch 3, wobei der Energieeintrag mittels Energieeintragsmittel nach dem Auftragen des Partikelmaterials erfolgt.

**5.** Verfahren nach einem der vorhergehenden Ansprüche, wobei das Energieeintragsmittel ein Overheadstrahler ist oder/und eine IR-Lampe, vorzugsweise
wobei der Overheadstrahler eingestellt wird, um eine Temperatur im Bauraum oder/und im aufgebrachten Partikelmaterial zu erzeugen von 30 bis 180 °C, vorzugsweise
wobei der Overheadstrahler ein Keramik-Heizelement ist,

**6.** Verfahren nach einem der vorhergehenden Ansprüche, wobei Partikelmaterial mittels Recoater aufgetragen wird, anschließend Absorber selektiv mittels einem oder mehrerer Druckköpfe aufgebracht wird, der Energieeintrag mittels verfahrbarem und steuerbarem Energieeintragsmittel erfolgt, vorzugsweise unmittelbar im Anschluss an das Aufbringen des Partikelmaterials oder/und des Absorbers, das Energieeintragsmittel nach dem Recoater über das Baufeld verfahren wird, oder/und vor dem Auftragen des Partikelmaterials eine Vorbelichtung mittels Energieeintragsmittel erfolgt, und gegebenenfalls der Energieeintrag zusätzlich mittels einem weiteren über dem Baufeld befindlichen Energieeintragsmittel erfolgt, wobei dieses weitere Energieeintragsmittel steuerbar ist oder während des gesamten Verfahrens in Betrieb ist.

**7.** Verfahren nach einem der vorhergehenden Ansprüche, wobei zur Einstellung einer gewünschten Temperatur im Bauraum ein Gasstrom, vorzugsweise ein Luftstrom, durch den Luftraum des Bauraumes geleitet wird, vorzugsweise wobei der Luftstrom mittels Leitmitteln von oben oder/und seitlich in den Bauraum geleitet wird, im wesentlichen über das Baufeld geleitet wird oder über ihm zirkuliert und nach oben oder/und seitlich wieder aus dem Bauraum austritt, vorzugsweise
wobei die Temperatur im Bauraum auf 30 °C bis 60 °C, vorzugsweise auf 40 °C bis 50 °C, eingestellt wird.

**8.** Vorrichtung zum Durchführen eines 3D-Druckverfahrens, die aufweist: a. ein Baufeld (018) b. einen Schwingklingenrecoater (021) mit Heizelement (010) c. einen Druckkopf (022), d. ein oder mehrere Energieeintragsmittel, wobei am oder neben dem Schwingklingenrecoater mit Heizelement ein Energieeintragsmittel zusammen mit diesem verfahrbar angebracht ist und vorzugsweise Leitmittel zum Einstellen der Bauraumtemperatur mittels Luftstromdurchführung 028) durch den Bauraum (23)

**9.** Vorrichtung nach Anspruch 8, wobei zwei Energieeintragsmittel über dem Baufeld fest oder/und verfahrbar angebracht sind, vorzugsweise ist ein Energieeintragsmittel verfahrbar an oder neben dem Schwingklingenrecoater positioniert, vorzugsweise
wobei ein Energieeintragsmittel ein Overheadstrahler ist und ein Energieeintragsmittel ein IR-Strahler ist, vorzugsweise
wobei ein oder mehrere Reflektormittel oberhalb von Baufeld und Energieeintragsmittel angebracht sind, vorzugsweise
wobei die Erzeugung des Hubs des Schwingklingenrecoaters mittels einer Exzenterwelle erfolgt oder/und der Hub 0,05 - 0,3 mm, vorzugsweise 0,15 mm, beträgt oder/und die Schwingfrequenz zwischen 30 Hz und 150 Hz beträgt oder/und die Schwingfrequenz elektronisch steuerbar ist, vorzugsweise wobei die Erzeugung des Hubs des Schwingklingenrecoaters elektrisch, elektrodynamisch, elektrostatisch, pneumatisch, hydraulisch oder/und mit einem Linearmotor erzeugt wird, vorzugsweise
wobei die Erzeugung des Hubs des Schwingklingenrecoaters mit einem elektro-magnetischen Aktor erzeugt wird oder/und dieser als Tauchspule ausgeführt ist oder/und dieser über frequenzabhängige Strom-Spannungs-Analyse oder/und mittels eines Beschleunigungssensors auf konstanten Hub und Frequenz geregelt wird oder/und Hub und Frequenz elektronisch einstellbar ausgeführt werden.

**Claims**

**1.** A method for producing three-dimensional parts (004), wherein
a particulate material is applied layer by layer onto a construction field, an absorber is selectively applied, the areas with absorber are solidified by energy input, and these steps are repeated until the three-dimensional part or parts is/are obtained, wherein
the particulate material (003) is applied by means of a recoater (021) and the absorber is selectively applied by a print head (022) and the particulate material is selectively solidified by energy input means (026),
**characterised in that** the recoater is an oscillating blade recoater (021) having a temperature of 70 °C to 155 °C, the particulate material (003) is applied by generating a particulate material roll (011) in front of the recoater (001) in the coating direction, the diameter of the particulate material roll (006) is adjustable, and the particulate material is heated to or kept at a temperature of 155 °C to 180 °C by energy input means (010) during application onto the construction field.

2. The method according to claim 1, wherein, before each application of particulate material, the construction field is lowered by a defined amount or construction units are raised by a defined amount, wherein said defined amount preferably corresponds to the layer thickness of the applied particulate material, preferably wherein a particulate material is used which has an average particle size of 50-60 $\mu$m, preferably 55 $\mu$m, or/and which has a melting temperature of 180-190 °C, preferably 186 °C, or/and which has a recrystallization temperature of 140-150 °C, preferably 145 °C, more preferably a polyamide 12, even more preferably PA2200® or Duraform PA®, is used, preferably

wherein the absorber is a liquid, preferably an oil-based ink, which contains carbon particles, e.g. Sun Chemical IK821, the absorber preferably comprising radiation-absorbing components, plasticizers for the particulate material or/and one or more substances interfering with recrystallization, preferably

wherein the recoater comprises one or more oscillating blades and a particulate material reservoir, preferably

wherein the temperature in the particulate material reservoir of the recoater is adjusted to 70 to 155 °C, or/and

wherein the temperature of the particulate material being applied is adjusted to 80 to 155 °C, or/and

wherein the diameter of the particulate material roll is 1 to 8 mm, preferably 2 to 6 mm, even more preferably 3 to 5 mm, preferably

wherein the dimensions of the particulate material roll are kept substantially constant during application of the particulate material, preferably wherein the temperature in the particulate material roll is kept constant during application of the particulate material, preferably

wherein an energy input means, which may advantageously be movable, is used on or in the area of the recoater.

3. The method according to any one of the preceding claims, wherein the energy input is effected by an energy input means arranged above the construction field and/or a movable energy input means arranged behind the recoater.

4. The method according to claim 3, wherein the energy input by energy input means is effected after application of the particulate material.

5. The method according to any one of the preceding claims,
wherein the energy input means is an overhead radiator or/and an IR lamp, preferably
wherein the overhead radiator is adjusted to generate a temperature of 30 to 180 °C in the construction space or/and in the applied particulate material, preferably wherein the overhead radiator is a ceramic heating element.

6. The method according to any one of the preceding claims,
wherein particulate material is applied by means of a recoater, followed by selective application of absorber by means of one or more print heads, the energy input is effected by a movable and controllable energy input means, preferably directly after application of the particulate material or/and of the absorber, the energy input means is moved over the construction field after the recoater, or/and pre-exposure is effected by energy input means before application of the particulate material, and, optionally, the energy input is additionally effected by a further energy input means arranged above the construction field, said further energy input means being controllable or being operative throughout the entire process.

7. The method according to any one of the preceding claims,
wherein a gas flow, preferably an air flow, is conducted through the air space of the construction space in order to adjust a desired temperature in the construction space, preferably
wherein the air flow is conducted into the construction space by conducting means from above or/and laterally, is conducted substantially over the construction field or circulates above the construction field and exits from the construction field again upwards or/and laterally, preferably
wherein the temperature in the construction space is adjusted to 30 °C to 60 °C, preferably 40 °C to 50 °C.

8. A device for carrying out a 3D printing method, said device comprising:

 a. a construction field (018),
 b. an oscillating blade recoater (021) with a heating element (010),
 c. a print head (022),
 d. one or more energy input means, wherein an energy input means is mounted on or next to the oscillating blade recoater with the heating element so as to be movable along with the latter and, preferably, conducting means for adjusting the construction space temperature by means of an air flow passage (028) through the construction space (023).

9. The device according to claim 8,
wherein two energy input means are mounted in a fixed or/and movable manner above the construction field, wherein one energy input means is preferably positioned in a movable manner on or next to the oscillating blade recoater, preferably
wherein one energy input means is an overhead radiator and one energy input means is an IR radiator, preferably
wherein one or more reflector means are mounted above the construction field and the energy input means, preferably
wherein the stroke of the oscillating blade recoater is generated by means of an eccentric or/and the stroke has a length of 0.05-0.3 mm, preferably 0.15 mm, or/and the oscillation frequency is between 30 Hz and 150 Hz or/and the oscillation frequency is electronically controllable, preferably
wherein the stroke of the oscillating blade recoater is generated electrically, electrodynamically, electrostatically, pneumatically, hydraulically or/and by a linear motor, preferably
wherein the stroke of the oscillating blade recoater is generated by an electromagnetic actuator or/and the oscillating blade recoater is embodied as a plunger coil or/and is controlled by frequency-dependent current-voltage analysis or/and is controlled by means of an acceleration sensor to have a constant stroke and frequency or/and the stroke and frequency are configured to be electronically adjustable.

**Revendications**

1. Procédé de fabrication de composants tridimensionnels (004), dans lequel un matériau particulaire est appliqué couche par couche sur un champ de construction, un absorbeur est appliqué de manière sélective, les zones avec absorbeur sont solidifiées par un apport d'énergie, et ces étapes sont répétées jusqu'à ce que le ou les composants tridimensionnels soient obtenus, dans lequel le matériau particulaire (003) est appliqué au moyen d'un réenducteur (021) et l'absorbeur est appliqué sélectivement par une tête d'impression (022), et le matériau particulaire est solidifié par un moyen d'apport d'énergie (026), **caractérisé en ce que** le réenducteur est un réenducteur à lame oscillante (021) ayant une température de 70 °C à 155 °C, le matériau particulaire (003) est appliqué en produisant un rouleau de matériau particulaire (011) en avant du réenducteur (001) dans la direction d'enduction, le diamètre du rouleau de matériau particulaire (006) est réglable, et le matériau particulaire est chauffé ou maintenu à une température de 155 °C à 180 °C par des moyens d'apport d'énergie (010) lorsqu'il est appliqué sur le champ de construction.

2. Procédé selon la revendication 1, dans lequel le champ de construction est abaissé d'une distance définie ou des unités de construction sont relevées d'une distance définie avant chaque application de matériau particulaire, cette distance définie correspondant de préférence à l'épaisseur de couche du matériau particulaire appliqué, de préférence
dans lequel on utilise un matériau particulaire ayant une granulométrie moyenne de 50 - 60 $\mu$m, de préférence 55 $\mu$m, ou/et ayant une température de fusion de 180 - 190 °C, de préférence 186 °C ou/et une température de recristallisation de 140 - 150 °C, de préférence 145 °C, utilisant plus préférablement un polyamide12, encore plus préférablement PA2200® ou Duraform PA®, de préférence dans lequel l'absorbeur est un liquide, de préférence une encre à base d'huile contenant des particules de carbone, par exemple Sun Chemical IK821, de préférence dans lequel l'absorbeur comprend des composants absorbant les rayonnements, des plastifiants pour le matériau particulaire ou/et une ou plusieurs substances pour perturber la recristallisation, de préférence
dans lequel le réenducteur comprend une ou plusieurs lames oscillantes et un réservoir de matériau particulaire, de préférence
dans lequel la température dans le réservoir de matériau particulaire du réenducteur est réglée à 70 à 155 °C ou/et
dans lequel la température du matériau particulaire lors de l'application est réglée à 80 à 155 °C ou/et
dans lequel le diamètre du rouleau de matériau particulaire est de 1 à 8 mm, de préférence de 2 à 6 mm, plus préférablement de 3 à 5 mm, de préférence dans lequel les dimensions du rouleau de matériau particulaire sont maintenues sensiblement constantes lors de l'application du matériau particulaire, de préférence dans lequel la température dans le rouleau de matériau particulaire est maintenue constante lors de l'application du matériau particulaire, de préférence dans lequel on utilise, au niveau ou dans la zone du réenducteur, un moyen d'apport d'énergie qui est de préférence mobile.

3. Procédé selon l'une quelconque des revendications précédentes, dans lequel l'apport d'énergie est effectué par un moyen d'apport d'énergie situé au-dessus du champ de construction et/ou un moyen d'apport d'énergie mobile disposé derrière le réenducteur.

**4.** Procédé selon la revendication 3, dans lequel l'apport d'énergie se fait par des moyens d'apport d'énergie après l'application du matériau particulaire.

**5.** Procédé selon l'une quelconque des revendications précédentes,
dans lequel le moyen d'apport d'énergie est un radiateur installé en haut ou/et une lampe IR, de préférence
dans lequel le radiateur installé en haut est réglé pour générer une température de 30 à 180 °C dans l'espace de construction ou/et dans le matériau particulaire appliqué, de préférence dans lequel le radiateur installé en haut est un élément chauffant en céramique.

**6.** Procédé selon l'une quelconque des revendications précédentes,
dans lequel le matériau particulaire est appliqué au moyen d'un réenducteur, puis un absorbeur est appliqué sélectivement au moyen d'une ou plusieurs têtes d'impression, l'apport d'énergie est effectué par un moyen d'apport d'énergie mobile et contrôlable, de préférence immédiatement après l'application du matériau particulaire ou/et de l'absorbeur, le moyen d'apport d'énergie est déplacé sur le champ de construction après le réenducteur, ou/et une pré-exposition par un moyen d'apport d'énergie a lieu avant l'application du matériau particulaire et, le cas échéant, l'apport d'énergie a lieu en outre à l'aide d'un autre moyen d'apport d'énergie situé au-dessus du champ de construction, cet autre moyen d'apport d'énergie pouvant être contrôlé ou étant en fonctionnement pendant tout le procédé.

**7.** Procédé selon l'une quelconque des revendications précédentes,
dans lequel, afin de régler une température souhaitée dans l'espace de construction, un flux de gaz, de préférence un flux d'air, est guidé à travers l'espace d'air de l'espace de construction, de préférence
dans lequel le flux d'air est guidé au moyen de moyens de guidage par le haut ou/et latéralement dans l'espace de construction, est essentiellement guidé sur l'espace de construction ou circule au-dessus de celui-ci et sort à nouveau de l'espace de construction vers le haut ou/et latéralement, de préférence dans lequel la température dans l'espace de construction est réglée entre 30 °C et 60 °C, de préférence entre 40 °C et 50 °C.

**8.** Dispositif destiné à réaliser un procédé d'impression 3D, comprenant :

a. un champ de construction (018),
b. un réenducteur à lame oscillante (021) avec un élément chauffant (010),
c. une tête d'impression (022),
d. un ou plusieurs moyens d'apport d'énergie, un moyen d'apport d'énergie étant monté sur ou à côté du réenducteur à lame oscillante avec un élément chauffant de manière à être mobile avec celui-ci, et de préférence des moyens de guidage pour régler la température de l'espace de construction au moyen d'un passage de flux d'air (028) à travers l'espace de construction (023).

**9.** Dispositif selon la revendication 8,
dans lequel deux moyens d'apport d'énergie sont montés de manière fixe ou/et mobile au-dessus du champ de construction, un moyen d'apport d'énergie étant de préférence positionné de manière mobile sur ou à côté du réenducteur à lame oscillante, de préférence
dans lequel un moyen d'apport d'énergie est un radiateur installé en haut et un moyen d'apport d'énergie est un radiateur IR, de préférence
dans lequel un ou plusieurs moyens réflecteurs sont montés au-dessus du champ de construction et des moyens d'apport d'énergie, de préférence dans lequel la course du réenducteur à lame oscillante est générée au moyen d'un arbre excentrique ou/et la course est de 0,05 - 0,3 mm, de préférence 0,15 mm ou/et la fréquence d'oscillation est comprise entre 30 Hz et 150 Hz ou/et la fréquence d'oscillation est contrôlable électroniquement, de préférence dans lequel la course du réenducteur à lame oscillante est générée électriquement, électrodynamiquement, électrostatiquement, pneumatiquement, hydrauliquement ou/et avec un moteur linéaire, de préférence
dans lequel la course du réenducteur à lame oscillante est générée au moyen d'un actionneur électromagnétique ou/et ledit actionneur est conçu comme une bobine plongeante ou/et ledit actionneur est commandé à une course et une fréquence constantes au moyen d'une analyse courant-tension dépendant de la fréquence ou/et au moyen d'un capteur d'accélération ou/et la course et la fréquence sont conçues pour être réglables électroniquement.

003    004    006    001

005

Figur 1 a)

Figur 1 b)

**Figur 2**

**Figur 3**

003    014

010

013

009

012

011    003

Figur 4 a)

EP 3 393 762 B1

**Figur 4 b)**

24

010

012

011

018

020   017

019

Figur 4 c)

**Figur 5**

**Figur 6**

027

026

027

030

031

018

I

032

033

X

T

034

X

**Figur 7**

036

1

T$_2$

039

041

040

038

035

037

**Figur 8**

**Figur 9a**

**Figur 9b**

**Figur 10**

043

**Figur 11a**

**Figur 11b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0431924 B1
- EP 1740367 B1
- EP 1648686 B1
- US 20050263933 A1
- DE 102006055050 A1
- DE 102006023485 A1
- DE 102013206458 A1
- DE 102005022308 B4